(19) Europäisches Patentamt
European Patent Office
Office européen des brevets

(11) EP 3 636 609 B1

(12) EUROPÄISCHE PATENTSCHRIFT

(45) Veröffentlichungstag und Bekanntmachung des Hinweises auf die Patenterteilung:
23.06.2021 Patentblatt 2021/25

(51) Int Cl.:
*C03C 3/097* (2006.01)     *C03C 21/00* (2006.01)

(21) Anmeldenummer: 19198127.3

(22) Anmeldetag: 18.09.2019

(54) **GLAS MIT ERHÖHTER SPEICHERBARER ZUGSPANNUNG, CHEMISCH VORGESPANNTER GLASARTIKEL MIT ERHÖHTER SPEICHERBARER ZUGSPANNUNG, VERFAHREN ZU DESSEN HERSTELLUNG SOWIE DESSEN VERWENDUNG**

GLASS WITH INCREASED STORAGE TENSILE STRESS, CHEMICALLY PRESTRESSED GLASS ARTICLE WITH INCREASED STORABLE TENSILE STRESS, METHOD FOR THE PRODUCTION OF SAME AND USE THEREOF

VERRE À CONTRAINTE DE TRACTION ÉLEVÉE POUVANT ÊTRE MÉMORISÉE, ARTICLE EN VERRE CHIMIQUEMENT PRÉCONTRAINT À CONTRAINTE DE TRACTION ÉLEVÉE POUVANT ÊTRE MÉMORISÉE, SON PROCÉDÉ DE FABRICATION AINSI QUE SON UTILISATION

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 08.10.2018 DE 102018124785

(43) Veröffentlichungstag der Anmeldung:
15.04.2020 Patentblatt 2020/16

(73) Patentinhaber: SCHOTT AG
55122 Mainz (DE)

(72) Erfinder:
• DIETRICH, Dr. Rüdiger
07745 Jena (DE)
• ALKEMPER, Dr. Jochen
55270 Klein-Winternheim (DE)
• HOCHREIN, Dr. Oliver
55130 Mainz (DE)
• KRÜGER, Dr. Susanne
55127 Mainz (DE)
• WEISSHUHN, Dr. Julia
55122 Mainz (DE)

(74) Vertreter: Blumbach · Zinngrebe Patentanwälte PartG mbB
Alexandrastraße 5
65187 Wiesbaden (DE)

(56) Entgegenhaltungen:
WO-A1-2012/126394     WO-A1-2018/152845
DE-A1-102010 009 584     DE-T5-112011 100 664

**Beschreibung**

Gebiet der Erfindung

Die Offenbarung betrifft allgemein Gläser, insbesondere Gläser, welche vorspannbar sind, insbesondere chemisch vorspannbare Gläser, sowie Glasartikel, welche ein solches Glas umfassen, beispielsweise aus einem solchen Glas hergestellt sind oder aus einem solchen Glas bestehen. Insbesondere betrifft die vorliegende Offenbarung auch chemisch vorspannbare und chemisch vorgespannte Glasartikel. Vorzugsweise sind diese Gläser und Glasartikel so ausgestaltet, dass sie die in ihnen speicherbare Zugspannung gegenüber Gläsern und Glasartikeln des Standes der Technik erhöht ist. Weiterhin betrifft die vorliegende Offenbarung ein Verfahren zur Herstellung eines solchen Glasartikels sowie dessen Verwendung.

Hintergrund der Erfindung

Vorspannbare und vorgespannte Gläser und/oder Glasartikel sind beispielsweise bekannt aus der WO 2018/152845 A1, der DE 11 2011 100 664 T5, der US 2018/0057401 A1, der US 2018/0029932 A1, der US 2017/0166478 A1, der US 9,908,811 B2, der US 2016/0122240 A1, der US 2016/0122239 A1, der US 2017/0295657 A1, der US 8,312,739 B2, der US 9,359,251 B2, der US 9,718,727 B2, der US 2012/0052271 A1, der US 2015/0030840 A1, der US 2014/0345325 A1, der US 9,487,434 B2, der US 9,517968 B2, der US 9,567,254 B2, der US 9,676,663 B2, der US 2018/0002223 A1, der US 2017/0166478 A1, der US 2017/0129803 A1, der US 2016/01002014 A1, der US 2015/0368153 A1, der US 2015/0368148 A1, der US 2015/0239775 A1, der US 9,908,812 B2, der US 9,902,648 B2, der US 9,593,042 B2, der WO 2012/126394 A1, der US 9,540,278 B2, der US 8,759,238 B2, der US 8,075,999 B2, der US 4,055,703, der DE 10 2010 009 584 B4 und der CN 102690059 A.

Solche hoch vorspannbaren Gläser wurden entwickelt, um Anforderungen, welche beispielsweise an Schutzgläser für Mobilgeräten gestellt werden, zu erfüllen. Üblicherweise handelt es sich hierbei um Alumosilikatgläser, welche im Rahmen der vorliegenden Offenbarung auch als "AS-Gläser" bezeichnet werden, oder um sogenannte Lithium-Alumosilikatgläser (im Rahmen der vorliegenden Offenbarung auch als "LAS-Gläser" bezeichnet).

Mit anderen Worten ausgedrückt umfassen Alumosilikatgläser Siliciumoxid $SiO_2$ und Aluminiumoxid $Al_2O_3$ als Komponenten sowie Alkalioxide außer Lithiumoxid $Li_2O$, Lithium-Alumosilikatgläser weiterhin noch Lithiumoxid $Li_2O$. Ein Unterschied zwischen den hier als "Alumosilikatgläsern" und als "Lithium-Alumosilikatgläsern" bezeichneten Gläsern ist also, dass die Lithium-Alumosilikatgläser $Li_2O$ umfassen, die Alumosilikatgläser aber nicht Neben den vorgenannten Komponenten umfasst das Glas zumeist noch weitere Komponenten.

Diese Gläser sind so ausgestaltet, dass sie chemisch vorspannbar sind. Unter einem Glas, welches chemisch vorspannbar ist, wird im Rahmen der vorliegenden Offenbarung ein Glas verstanden, welches einem Ionenaustauschprozess zugänglich ist. In einem solchen Prozess werden in einer Oberflächenschicht eines Glasartikels, wie beispielsweise einer Glasscheibe, Ionen von Alkalimetallen ausgetauscht. Dies erfolgt derart, dass in der Oberflächenschicht nunmehr eine Druckspannungszone aufgebaut wird, was durch den Austausch von Ionen mit kleineren Radien durch Ionen mit größeren Radien erzielt wird. Dazu wird der Glasartikel in ein sogenanntes Ionenaustauschbad, beispielsweise eine Salzschmelze, eingetaucht, wobei das Ionenaustauschbad die Ionen mit den größeren Ionenradien umfasst, insbesondere Kalium- und/oder Natriumionen, so dass diese in die Oberflächenschicht des Glasartikels migrieren. Im Austausch dafür wandern Ionen mit geringeren Ionenradien, insbesondere Lithium- und/oder Natriumionen, aus der Oberflächenschicht des Glasartikels in das Ionenaustauschbad.

Dadurch bildet sich eine Druckspannungszone aus. Diese kann durch die kennzeichnenden Größen der Druckspannung, welche auch als "compressive stress" oder abgekürzt "CS" bezeichnet wird, und die Druckspannungstiefe, die auch als "Depth of Layer" oder abgekürzt "DoL" bezeichnet wird, beschrieben werden. Diese Druckspannungstiefe DoL ist dem Fachmann hinlänglich bekannt und bezeichnet im Rahmen der vorliegenden Offenbarung diejenige Tiefe, bei der die Spannungskurve den Spannungsnulldurchgang hat. Alternativ oder zusätzlich kann diese Dicke DoL mittels eines spannungsoptischen Nulldurchgangsmessverfahrens, beispielsweise mittels eines Messgerätes mit der Handelsbezeichnung FSM-6000 oder SLP 1000 bestimmt werden.

Mittels dieses Messgeräts kann für Alumosilikatgläser ebenfalls die Druckspannung der Oberfläche sowie die maximale Druckspannung CS einer Scheibe oder eines scheibenförmigen Glasartikels ermittelt werden.

Üblicherweise werden bei hoch vorspannbaren Gläsern (nur diese kommen beispielsweise als Schutzgläser für Mobilgeräte mit hohen Anforderungen an verschiedene Festigkeitsansprüche in Frage) hohe Werte für die Druckspannung (zwischen 700 MPa und 1000 MPa) erzielt bei Druckspannungstiefen zwischen 40 μm und 200 μm. Kommt es zu einem Austausch nicht nur von einem Ion, sondern zu einem kombinierten Austausch beispielsweise von Kalium-Ionen und Natrium-Ionen, wie dies in der Regel bei LAS-Gläsern der Fall ist, werden die die Druckspannung charakterisierenden Größen CS und DoL häufig auch bezogen auf die jeweilige Komponente bzw. Ionen angegeben, also beispielsweise die durch den Austausch von Kalium resultierende Druckspannung als "CS Kalium" und die entsprechende Druckspannungstiefe als "Kalium-DoL" oder Kalium-Druckspannungstiefe.

Gegenüber den AS-Gläsern sind LAS-Gläser vorteilhaft, da mit ihnen schneller höhere Druckspannungstiefen erzielt werden können. Die Druckspannungstiefe wird dabei angegeben als der Wert, bei welchem die Spannungskurve den Wert 0 MPa aufweist, ist also im Spannungsdiagramm durch den Durchgang der Spannungskurve bei 0 gekennzeichnet. Die Druckspannungstiefe beträgt bei LAS-Giäsern schon bei Prozesszeiten von 1 bis 3 Stunden in der Regel mindestens 100 $\mu$m oder mehr.

Auch bei AS-Gläsern sind zwar hohe Druckspannungstiefen möglich, beispielsweise von bis zu 125 $\mu$m oder mehr. Allerdings muss bei solchen Gläsern dann eine sehr hohe Vorspanntemperatur von 450°C oder mehr und/oder sehr lange Vorspannzeiten von 8 Stunden oder mehr gewählt werden, um solche Druckspannungstiefen zu erreichen. LAS-Gläser bieten demgegenüber den Vorteil, dass hohe Werte für die Druckspannung und die Druckspannungstiefe bei deutlichen günstigeren Bedingungen erreicht werden können, also bei niedrigeren Temperaturen und/oder geringeren Austauschzeiten.

Die messtechnische Ermittlung der Werte für die Druckspannung und die Druckspannungstiefe erfolgt mit marktüblichen Geräten, wie beispielsweise dem Geräte FSM 6000 für die Ermittlung der durch den Austausch von Kalium erzielten Druckspannung (Kalium CS) und Druckspannungstiefe (Kalium-DoL) sowie beispielsweise dem Gerät SLP 1000 für die Ermittlung der mit dem Austausch von Natrium erzielten charakteristischen Werte für die Spannung, insbesondere den Wert der durch Natriumaustausch erzielten Druckspannung bei einer Tiefe von 30 $\mu$m (auch abgekürzt als "Na CS 30") und die mit Natrium erzielten Druckspannungstiefe (Natrium-DoL). Diese Geräte werden von der Firma Orihara Ltd. angeboten.

Mit solcherart vorgespannten Glasartikeln werden hohe mechanische Festigkeiten erzielt Beachtlich hinsichtlich der Festigkeit eines Erzeugnisses, wie beispielsweise eines Glasartikels, ist jedoch, dass die mechanische Festigkeit eines Erzeugnisses nicht nur vom Material abhängt, sondern insbesondere auch von der Art der Beanspruchung. So weisen bekannte chemisch vorgespannte Glasartikel beispielsweise eine hohe Biegefestigkeit, beispielsweise bestimmt in einer Vier-Punkt-Biegung, oder eine hohe Impaktfestigkeit, beispielsweise bestimmt in einem sogenannten Kugelfalltest, oder eine hohe Festigkeit bei einem sogenannten "sharp impact" auf. Ein sehr wichtiger Test für mobile Endgeräte ist beispielsweise der sogenannte set-drop-Test. Bei diesem Test handelt es sich um eine Untersuchung, bei welcher Belastungen von Glasartikeln, wie sie in realen Anwendungen auftreten können, untersucht werden. Hierfür wird ein Glasartikel in der Form verbaut, wie er beispielsweise in einem späteren mobilen Gerät, wie einem Smartphone, verbaut werden würde. Es wird somit ein Modell eines Endgeräts, beispielsweise das Modell eines Smartphones, gebaut, bei welchem der Glasartikel, beispielsweise verwendet als Displayabdeckung, zum Einsatz kommt. Das Gewicht des Modells entspricht dabei weitgehend dem eines tatsächlichen Endgeräts, ebenso wie der Einbau des Glasartikels, jedoch ohne die Verwendung entsprechender Bauteile. Das Modell wird dann mit dem Glasartikel nach unten auf eine Oberfläche fallen gelassen, welche beispielsweise Partikel mit kleinen Krümmungsradien umfasst Solche Tests sollen somit reale Beanspruchungen simulieren, beispielsweise wenn ein Smartphone auf Asphalt oder gefliesten Untergrund fällt. Dabei ist allgemein bekannt, dass rauer Untergrund, also Untergrund aus welchem spitze Steinchen oder Sandkörner herausragen, sehr kritisch für die Unversehrtheit eines Schutzglases für mobile Endgeräte ist. Beispielsweise unterscheiden sich Fallhöhen mit den beschriebenen glasbestückten Dummys deutlich, wenn sie auf glatte Oberflächen - wie Granit - oder auf mit Sandpapier beklebte raue Oberflächen, wie einem mit Sandpapier beklebten Granit, fallen. Fallhöhen mit rauem Untergrund, simuliert durch mit Sandpapier beklebtem Granit, sind kleiner als Fallhöhen auf glattem Untergrund. Alternative Tests, mit welchen solche "sharp impact"-Festtgkeiten untersucht werden, sind beispielsweise sogenannte "sandpaper ball drop tests". Beispielsweise beschreibt die USamerikanische Patentanmeldung US 2015/0239775 A1 einen beispielhaften Aufbau eines Sandpapierkugelfalltests.

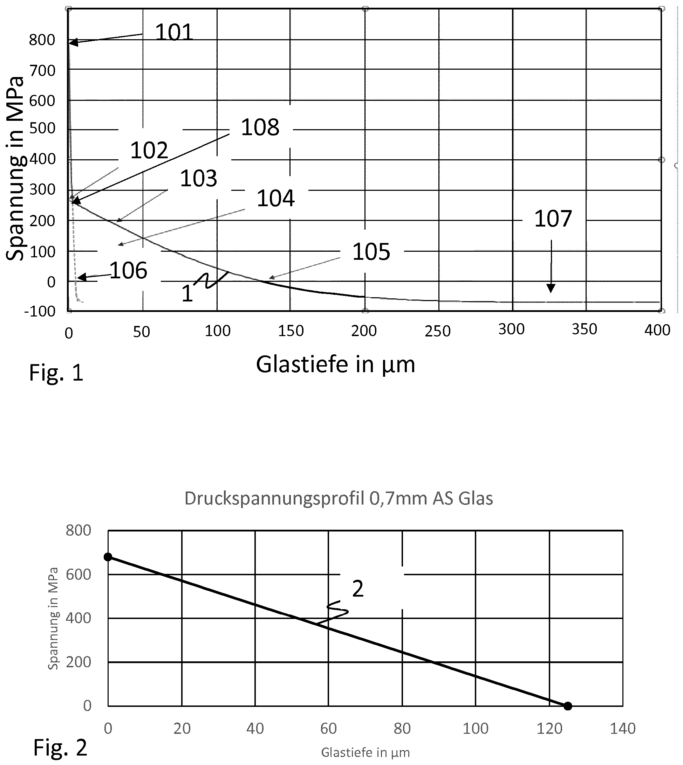

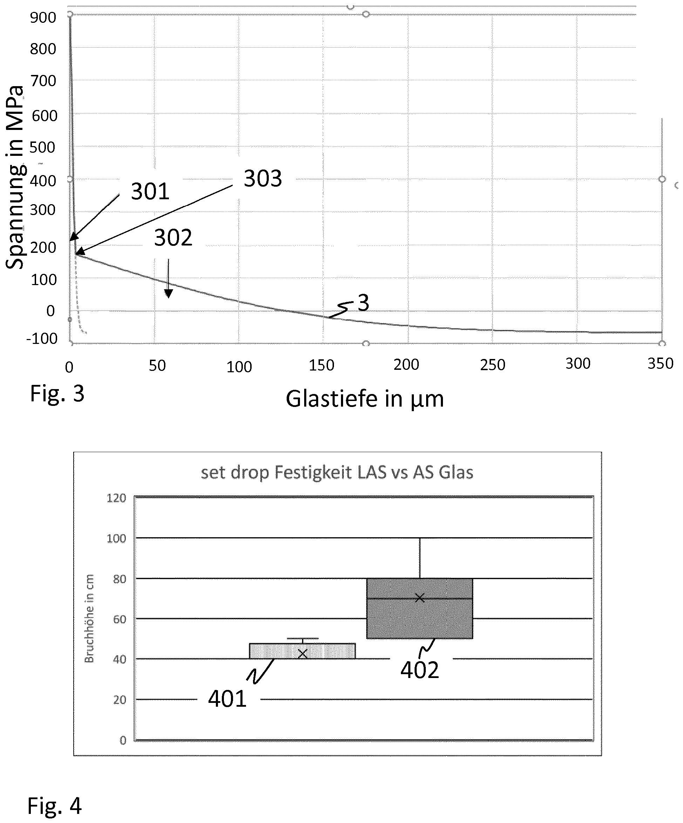

Während Alumosilikatgläser mit ihren Vorspannprofilen noch gute bis sehr gute Fallhöhen bei "set-drop"-Tests auf glattem Untergrund aufweisen, wird der Unterschied zu LAS-Gläsern beim "set-Drop"-Test auf Sandpapier sehr schnell deutlich, Dies ist beispielsweise auch der beigeschlossenen Fig. 4 zu entnehmen. Die Druckspannungsparameter eines Alumosilikatglases können beispielsweise der beigeschlossenen Fig. 2 entnommen werden. Dabei können die üblichen Druckspannungsparameter - also die Druckspannung CS und die Druckspannungstiefe DoL - praktisch vergleichbar sein mit denen eines LAS-Gfases. Ein beispielhaftes Druckspannungsprofil für einen ein LAS-Glas umfassenden vorgespannten Glasartikel kann Fig. 3 entnommen werden. Es handelt sich hierbei um ein Druckspannungsprofil eines LAS-Glases nach dem Stand der Technik. Wie aus dem Vergleich der Fig. 2 und 3 deutlich wird, besteht somit ein signifikanter Unterschied zwischen diesen Glasartikeln in der höheren gespeicherten Zugspannung im Alumosilikatglas, In Fig. 4 ist dieser Sachverhalt experimentell verdeutlicht. Das Alumosilikatglas mit der deutlich höheren gespeicherten Zugspannung weist eine deutlich schlechtere Festigkeit im Sandpapier-"set-Drop"-test auf, dargestellt im Balken 401, also in einem sogenannten "sharp-impact"-Festigkeitstest, als das LAS-Glas, dessen Festigkeit im Sandpapier-"set-Drop"-Test im Balken 402 dargestellt ist.

Es ist Stand der Technik, dass neben den klassischen Druckspannungsparametern CS und DoL auch die Zugspannung festigkeitsrelevant ist. Hierbei hat sich gezeigt, dass bei zu hohen Druckspannungsintegralen - welche entsprechend auch sehr große Zugspannungsintegrale zur Folge haben, da die in die Oberfläche eingebrachte Druckspannung eines Glasartikels, welche durch einen Vorspannprozess resultiert, gleich groß ist wie die im Innern des Glasartikels resultierende Zugspannung - der Festigkeitszuwachs stagniert oder sogar rückläufig sein kann.

Dies ist darauf zurückzuführen, dass die Rissausbreitung stärker getriggert wird bzw. der Glasbruch bei Festigkeitsversuchen, wie beispielsweise einer Vier-Punkt Biegung oder einem Test, bei welchem die Sharp-impact-Festigkeit untersucht wird, wie beispielsweise einem "set-drop"-Test, früher stattfindet, Dies beschreibt beispielsweise die beigeschlossene Fig, 4 anhand experimenteller Daten. Hier zeigt das Alumosilikatglas mit der deutlich höheren gespeicherten Zugfestigkeit eine schlechtere Festigkeit im Sandpapier-"set-drop"-Test, also in einem "sharp-impact" Test. Dabei sind, wie auch vorstehend bereits ausgeführt, die anderen Druckspannungsparameter, also CS und DOL des Alumosilikatglasartikels (siehe Fig. 2) praktisch vergleichbar mit dem das LAS-Glasartikels nach Fig. 3. Ein signifikanter Unterschied besteht jedoch hinsichtlich der höheren gespeicherten Zugspannung im Alumosilikat-Glasadikel, welche bei 60,7 MPa liegt (siehe auch Vergleichsbeispiel - VB - 7 in Tabelle 2). Dies wird durch das zusammengesetzte oder kombinierte Druckspannungsprofil des LAS-Glasartikels ermöglicht, welches sich aus dem Druckspannungsanteil aus dem Kalium- und aus dem Natrium-Ionenaustausch zusammensetzt.

Glasartikel mit kombinierten Druckspannungsprofilen weisen also bezüglich der kritischen sharp-impact-Festigkeit deutliche Vorteile gegenüber Alumosilikatgläsern bzw. -Glasartikeln auf aufgrund ihrer deutlich geringeren gespeicherten Zugspannung bei ansonsten vergleichbaren CS- und DoL-Werten. Dennoch kommen auch derzeit marktübliche LAS-Gläser bzw. LAS-Glasartikel mit optimierten Vorspannprofilen nicht über mögliche marktrelevante Fallhöhen von mehr als 1 Meter auf rauem Untergrund hinaus. Es besteht also ein weiterer Bedarf an chemisch vorgespannten oder chemisch vorspannbaren Glasartikeln, bei welchen die Festigkeit gegenüber sharp-impact, beispielsweise für Schutzscheiben für mobile Endgeräte, weiter erhöht ist. Jedoch sind weitere Steigerungen der Druckspannungsparameter CS und DoL bei vergleichsweise geringer gespeicherter Zugspannung mit den derzeit auf dem Markt befindlichen Gläsern und den verwendeten Nachverarbeitungsprozessen nicht abzusehen. Eine weitere Steigerung von CS und DoL, die aufgrund der geringen gespeicherten Zugspannung noch möglich wäre, scheitert daran, dass das Maximum an speicherbarer Zugspannung für die derzeitigen LAS-Gläser bereits erreicht ist. Derzeitige LAS-Gläser und die mit ihnen erzielbare maximale gespeicherte Zugspannung sind beispielsweise Tabelle 2, Vergleichsbeispielen - VB - 3 bis 5 zu entnehmen.

Diese Belastungen sind somit besonders kritisch bei den AS-Gläsern, da hier aufgrund des Ionenausfauschprofils eine hohe Druckspannung an der Oberfläche und eine hohe Druckspannungstiefe stets auch eine hohe gespeicherte Zugspannung zur Folge haben.

Sogenannte LAS-Gläser, bei welchen sich das Druckspannungs- oder Ionenaustauschprofil aus dem Austausch nicht nur von Natrium-Ionen, sondern auch von Kalium-Ionen zusammensetzt, bieten hier einen Vorteil. Hier sind nämlich eine hohe Druckspannung und eine große Druckspannungstiefe bei gleichzeitig im Vergleich mit den Alumosilikatgläsern geringerer gespeicherter Zugspannung erreichbar. Beispielsweise beschreibt die deutsche Patentschrift DE 10 2010 009 584 B4 zweistufige Ionenaustauschverfahren, bei welchen beispielsweise bei 390°C über vier Stunden ein Austausch in einer Natriumnitratschmelze stattfindet, gefolgt von einem Austausch von 3 Stunden Dauer bei 390°C in einer Kaliumnitratschmelze. Auf diese Weise werden solche zusammengesetzte Druckspannungsprofile erhalten.

Dies bedeutet beispielsweise für den Fall der LAS-Gläser, bei welchen ein Austausch von Kalium- und Natrium-Ionen gegen Natrium- und/oder Lithium-Ionen erfolgt, dass ein Teil der im Glas erzeugten Druckspannung auf den Kalium-Austausch zurückgeht, ein weiterer Teil auf den Natrium-Austausch.

Der frühe Glasbruch, welcher bei Glasartikeln, die eine hohe Vorspannung aufweisen, gerade bei einer "sharp impact"-Belastung auftreten kann, ist darauf zurückzuführen, dass in einem solchen Belastungsfall die Beschädigung des Glasartikels durch die Belastung mit einem sehr spitzen Partikel durch die Druckspannungszone bis in den Bereich des Glasartikels, in welchem Zugspannung herrscht, erfolgt. In der Folge kann es dann zum Glasbruch kommen, insbesondere, wenn die im Glasartikel gespeicherte Zugspannung sehr hoch ist.

Ein solches Versagen durch einen "sharp impact" könnte dadurch umgangen werden, dass eine sehr hohe Druckspannung an der Oberfläche des Glasartikels erzeugt würde, welche sodann mit zunehmender Dicke des Glasartikels stark abnimmt, kombiniert mit einer insgesamt hohen Austauschtiefe .

Dies wäre beispielsweise für LAS-Gläser möglich, wenn mittels des Kalium-Austausch sehr hohe Druckspannungen an der Oberfläche erzeugt werden, jedoch eine nur sehr geringe Druckspannungstiefe für Kalium von lediglich wenigen Mikrometern und gleichzeitig eine hohe Druckspannungstiefe für Natrium bei gleichzeitig lediglich geringer Druckspannung, welche durch den Natrium-Austausch resultiert und welche insbesondere durch den sogenannten Na CS 30-Wert für die Druckspannung charakterisiert werden kann, erzeugt würde.

Jedoch zeigt sich, dass bei sehr geringen Druckspannungstiefen für Kalium, insbesondere von weniger als 4 μm, und bei nur geringen Na CS 30-Druckspannungswerten von weniger als 120 MPa eine nur geringe Fehlertoleranz resultiert und die in den Festigkeitstests erhaltenen Werte stark schwanken, insbesondere auch Ausreißer nach unten auftreten. Bei sehr starker Unterschreitung dieser Grenzwerte kommt es dann zu insgesamt sehr geringen Festigkeitswerten, auch in den sogenannten "blunt"-Versagensfällen, also bei Belastungen mit stumpfen Gegenständen (wie in einem herkömmlichen Kugelfalltest), sowie auch in statischen Festigkeitsuntersuchungen, wie beispielsweise einer Festigkeitsbestimmung nach der Doppelringmethode oder einer Vier-Punkt-Biegung,

Unter der Fehlertoleranz wird dabei der Fall verstanden, dass die Festigkeit von Glasartikeln untersucht wird, in welche bereits Vorschädigungen eingebracht worden sind. Wenn der Glasartikel eine geringe Fehlertoleranz aufweist, ist darunter zu verstehen, dass bereits bei einem geringen Grad einer Vorschädigung eine sehr starke Verminderung der Festigkeit auftritt. Eine hohe Fehlertoleranz bedeutet demgegenüber, dass auch bei eingebrachter Vorschädigung noch eine hohe Festigkeit erzielt wird. Unter Vorschädigungen sind hier Beschädigungen der Oberfläche des Glasartikels zu verstehen, beispielsweise durch Sandstrahlen oder Behandlung des Glasartikels mit einer rauen Oberfläche. Da die Festigkeit eines Glasartikels wesentlich durch die Oberflächengüte bestimmt wird, führt eine Vorschädigung der Oberfläche eines Glasartikels in der Regel zu einer signifikanten Abnahme der Festigkeit.

Es besteht somit ein Bedarf an Glasartikeln, welche eine hohe mechanische Festigkeit gegenüber sogenannten "sharp impacf"-Belastungen aufweisen. Weiterhin besteht ein Bedarf an Gläsern, welche durch eine vorzugsweise chemische Vorspannung eine hohe Festigkeit beim sogenannten "sharp impact" aufweisen,

Die Aufgabe der Erfindung besteht in der Bereitstellung von Glasartikeln und von Gläsern, welche die vorgenannten Schwächen des Standes der Technik überwinden oder zumindest mindern, insbesondere beispielsweise eine gegenüber dem Stand der Technik verbesserte Festigkeit bei sharp-impact-Belastungen aufweisen. Die Erfindung betrifft weiterhin die Verwendung solcher Glasartikel sowie ein Verfahren zu ihrer Herstellung.

Die Aufgabe wird gelöst durch den Gegenstand der unabhängigen Ansprüche, bevorzugte und spezielle Ausführungsformen finden sich in den abhängigen Ansprüchen.

Ein erster Aspekt der vorliegenden Offenbarung betrifft einen chemisch vorgespannten, scheibenförmigen Glasartikel mit einer Dicke zwischen mindestens 0,4 mm und höchstens 3,0 mm, welcher eine Druckspannungstiefe für Kalium von mindestens 4 $\mu$m und höchstens 8 $\mu$m aufweist und eine Druckspannung in einer Tiefe von 30 $\mu$m aufgrund von Natriumaustausch von mindestens 90 MPa bei einer Dicke des Glasartikels von 0,5 mm, mindestens 100 MPa bei einer Dicke des Glasartikels von 0,55 mm, mindestens 110 MPa bei einer Dicke des Glasartikels von 0,6 mm, mindestens 120 MPa bei einer Dicke des Glasartikels von 0,7 mm und mindestens 140 MPa bei einer Dicke des Glasartikels von 1 mm sowie vorzugsweise höchstens 200 MPa, wobei das Verhältnis von Natrium-Austauschtiefe in $\mu$m zur Dicke des Glasartikels in mm größer als 0,130 ist, sowie eine speicherbare Zugspannung von mindestens 20,6 MPa und höchstens 30 MPa, vorzugsweise höchstens 27,5 MPa, besonders bevorzugt von höchstens 25 MPa und ganz besonders bevorzugt von höchstens 24 MPa. Hierbei wird als speicherbare Zugspannung jeweils das Integral der Zugspannung ausgehend von einer ersten Hauptoberfläche zu der gegenüberliegenden Hauptoberfläche entlang einer Geraden in Normalenrichtung verstanden und dieses Integral zum Erhalt eines für verschieden dicke Substrate vergleichbaren Wertes durch die Integrationslänge, somit die Dicke des Substrats geteilt. Somit weist dieses auf die Dicke normierte Integral der Zugspannung die Dimension einer Spannung auf und liefert vergleichbare Werte für verschieden dicke Substrate.

Ein solcher Glasartikel kombiniert vorteilhaft eine hohe Druckspannung und eine große Druckspannungstiefe. Durch die hohe Druckspannungstiefe ist sichergestellt, dass erst bei sehr tiefen Verletzungen des Glasartikels, beispielsweise also bei sehr tiefen Ritzen o.ä., der Bereich des Glasartikels erreicht ist, in welchem Zugspannung vorliegt Der Glasartikel weist somit eine verbesserte Beständigkeit gegenüber sharp-impact-Belastungen auf, Diese hohe Festigkeit resultiert aus einer speicherbaren Zugspannung von mindestens 20,6 MPa.

Die speicherbare Zugspannung sollte jedoch, wie aus dem Beispiel der Alumosilikatgläser (siehe Tabelle 2, VB 7) deutlich ist, nicht maximiert werden, da noch höhere Werte der speicherbaren Zugspannung wieder zu einer geringen Festigkeit gegenüber sharp impact Belastungen führen würden. Eine mögliche Obergrenze für die speicherbare bzw. gespeicherte Zugspannung, bei der noch gute Werte in sharp-impact-Untersuchungen erhalten werden, liegt bei 30 MPa. Vorzugsweise sollte die gespeicherte Zugspannung einen Wert von 27,5 MPa nicht überschreiten, besonders bevorzugt nicht mehr als 25 MPa betragen. Insbesondere hat sich derzeit ein maximaler Wert der gespeicherten Zugspannung von 24 MPa als ganz besonders bevorzugt herausgestellt.

Die Bestimmung der gespeicherten Zugspannung erfolgt mit einer Schwankung von ca. 5 % bis 10% um den bestimmten Wert.

Der Einfachheit halber erfolgt die Berechnung des Zugspannungsintegrals unter Annahme eines linear verlaufenden Druckspannungsprofils. Für ein Alumosilikatglas ergibt sich diese daher nach der folgenden Formel:

$$CS * DoL / 2 * 1000 * d,$$

wobei unter CS die maximale Druckspannung an der Oberfläche des Glasartikels zu verstehen ist, die DoL die Druckspannungstiefe und d die Dicke des Glasartikels ist.

Für ein LAS-Glas mit einem zusammengesetzten Druckspannungsprofil ist die Berechnung etwas komplizierter und ergibt sich nach der folgenden Formel.

$$[K\ CS * K\ DoL/\ 2 * 1000 + Na\ CS\ Schnittpunkt * ((Na\ DoL - K\ DoL) + (Na\ DoL - K\ DoL\ Schnittpunkt))/2 * 1000]/d.$$

Auch hierbei bezeichnet d die Dicke des Glasartikels. Der "Natrium-CS-Schnittpunkt" beschreibt die Druckspannung an dem Punkt des Druckspannungsprofils, an welchem die Natrium-Druckspannungskurve und die Kalium-Druckspannungskurve sich schneiden. Unter dem "Kalium-DoL-Schnittpunkt" ist die Tiefe im Glasartikels an dem Punkt des Druckspannungsprofils verstanden, an welchem sich die Natrium-Druckspannungskurve und die Kalium-Druckspannungskurve sich schneiden.

In den beigefügten Figuren ist dieser Punkt in Fig. 1 mit der Bezugsziffer 108 gekennzeichnet, in Fig. 3 mit der Bezugsziffer 303.

Ein zweiter Aspekt der vorliegenden Offenbarung betrifft einen scheibenförmigen, chemisch vorgespannten Glasartikel mit einer Dicke zwischen mindestens 0,4 mm und höchstens 3,0 mm, welcher eine Druckspannungstiefe für Kalium von mindestens 4 $\mu$m und höchstens 8 $\mu$m aufweist und eine Druckspannung in einer Tiefe von 30 $\mu$m aufgrund von Natriumaustausch von mindestens 90 MPa bei einer Dicke des Glasartikels von 0,5 mm, mindestens 100 MPa bei einer Dicke des Glasartikels von 0,55 mm, mindestens 110 MPa bei einer Dicke des Glasartikels von 0,6 mm, mindestens 120 MPa bei einer Dicke des Glasartikels von 0,7 mm und mindestens 140 MPa bei einer Dicke des Glasartikels von 1 mm sowie vorzugsweise höchstens 200 MPa, wobei das Verhältnis von Natrium-Austauschtiefe in $\mu$m zur Dicke des Glasartikels in mm größer als 0,130 ist, sowie eine speicherbare Zugspannung von mindestens 20,6 MPa und höchstens 30 MPa, vorzugsweise höchstens 27,5 MPa, besonders bevorzugt von höchstens 25 MPa und ganz besonders bevorzugt von höchstens 24 MPa,

umfassend die folgenden Komponenten in Gew.-%:

| | |
|---|---|
| $SiO_2$ | 54 bis 64, bevorzugt 57 bis 64, besonders bevorzugt 60 bis 62 und ganz besonders bevorzugt 61 bis 62; |
| $Al_2O_3$ | 16 bis 28, bevorzugt 16 bis 21, besonders bevorzugt 17,5 bis 19,5 und ganz besonders bevorzugt 18 bis 19; |
| $B_2O_3$ | 0 bis 0,6, bevorzugt 0 bis 0,45, besonders bevorzugt 0 bis 0,28 und ganz besonders bevorzugt 0 bis 0,1; |
| $Li_2O$ | 3,5 bis 6,5, bevorzugt 3,7 bis 5,7, besonders bevorzugt 3,9 bis 5,5, ganz besonders bevorzugt 4 bis 5,4 und am meisten bevorzugt 4,5 bis 5,4; |
| $Na_2O$ | 3 bis 11,1, bevorzugt 7,1 bis 11,1 besonders bevorzugt 7,5 bis 10,7 und ganz besonders bevorzugt 7,8 bis 10,5; |
| $K_2O$ | 0 bis 1,5, bevorzugt 0,1 bis 1,5, besonders bevorzugt 0,2 bis 1 und ganz besonders bevorzugt 0,3 bis 0,75; |
| MgO | 0 bis 2, bevorzugt 0 bis 1,5 und besonders bevorzugt 0 bis 1; |
| CaO | 0 bis 0,55, bevorzugt 0 bis 0,5, besonders bevorzugt 0 bis 0,25 und ganz besonders bevorzugt 0 bis 0,1; |
| ZnO | 0 bis 3, bevorzugt 0 bis 2, besonders bevorzugt 0 bis 1,5 und ganz besonders bevorzugt 0 bis 1; |
| $P_2O_5$ | 0,1 bis 4,5, bevorzugt 0,1 bis 2, besonders bevorzugt 0,25 bis 1,75 und ganz besonders bevorzugt 0,5 bis 1,5; |
| $ZrO_2$ | 1 bis 4,5, bevorzugt 2,5 bis 4,5, besonders bevorzugt 2,8 bis 4,2 und ganz besonders bevorzugt 2,9 bis 4,1, |

wobei der Glasartikel vorzugsweise bis zu 0,15 Gew.-% $CeO_2$, bevorzugt bis zu 0,1 Gew.-% $CeO_2$, und/oder bis zu 0,1 Gew.-% $Fe_2O_3$ umfasst und wobei weiterhin vorzugsweise der Glasartikel SrO und BaO lediglich als unvermeidliche Spuren in einer Konzentration von jeweils höchstens 500 ppm umfasst, und

wobei 0,8 kleiner als [$P_2O_5$ + ($Na_2O$*ZnO) ] kleiner als 12.

Eine Zusammensetzung eines Glases bzw. eines Glasartikels in den vorgenannten Zusammensetzungsbereichen weist eine Reihe von Vorteilen auf.

Insbesondere hat sich gezeigt, dass ein Gehalt des Glases bzw. Glasartikels an $Al_2O_3$ zwischen 16 Gew.-% und 28 Gew.-% in vorteilhafter Weise die Vorspannbarkeit eines Glases bzw. eines Glasartikels erhöht. Vorzugsweise umfasst das Glas bzw. der Glasartikel $Al_2O_3$ zwischen 16 Gew,-% und 21 Gew.-%, besonders bevorzugt zwischen 17,5 Gew.-% und 19,5 Gew.-% und ganz besonders bevorzugt zwischen 18 und 19 Gew.-%.

$B_2O_3$ ist eine Komponente, welche in Schmelzen den Schmelzpunkt senkt. Auch kann die Zugabe von $B_2O_3$ dazu führen, die Kratzfestigkeit eines Glases bzw. Glasartikels vorteilhaft zu erhöhen. Jedoch wirkt sich ein hoher Gehalt an $B_2O_3$ negativ auf die Vorspannbarkeit eines Glases bzw. Glasartikels aus. Der Gehalt an $B_2O_3$ ist daher in den Gläsern und. Glasartikeln nach der vorliegenden Offenbarung begrenzt. Insbesondere beträgt der Gehalt der Gläser bzw. der Glasartikel nach der vorliegenden Offenbarung höchstens 0,6 Gew.-%, bevorzugt höchstens 0,45 Gew.-%, besonders bevorzugt höchstens 0,28 Gew.-% und ganz besonders bevorzugt höchstens 0,1 Gew.-%. Es ist auch möglich, dass Gläser oder Glasartikel nach der vorliegenden Offenbarung kein $B_2O_3$ umfassen bzw. $B_2O_3$ lediglich in Form einer unvermeidlichen Verunreinigung vom Glas bzw. vom Glasartikel umfasst ist.

Li$_2$O ist ein notwendiger Bestandteil der Gläser und Glasartikel nach der vorliegenden Offenbarung. Insbesondere ist durch den Gehalt der Gläser und Glasartikel nach der vorliegenden Offenbarung an Lithiumoxid sowohl eine gute Festigkeit vorgespannter Gläser in statischen Festigkeitsuntersuchungen wie der Biegefestigkeit nach der Vierpunkt-Biegung oder in der Festigkeit nach Bestimmung in einem Doppelringtest, als auch gegenüber blunt-impact-Belastungen, wie dem Kugelfalltest, als auch gegenüber sharp- impact-Belastungen, also Einwirken auf die Oberfläche eines Glases oder eines Glasartikels mit Partikeln, welche einen Winkel von weniger als 100° aufweisen, möglich. Die Gläser und Glasartikel nach der vorliegenden Offenbarung umfassen daher Li$_2$O zu mindestens 3,5 Gew.-%, bevorzugt zu mindestens 3,7 Gew.-%, besonders bevorzugt zu mindestens 3,9 Gew.-%, ganz besonders bevorzugt zu mindestens 4 Gew.-% und am meisten bevorzugt zu mindestens 4,5 Gew.-%. Jedoch ist der Gehalt an Li$_2$O nach der vorliegenden Offenbarung begrenzt. Beispielsweise kann es bei zu hohen Gehalten an Li$_2$O zu Entmischungen kommen. Die Gläser und Glasartikel umfassen daher Li$_2$O zu höchstens 6,5 Gew.-%, bevorzugt zu höchstens 5,7 Gew.-%, besonders bevorzugt zu höchstens 5,5 Gew.-% und ganz besonders bevorzugt zu höchstens 5,4 Gew.-%.

Weiterhin ist Natriumoxid Na$_2$O von den Gläsern und Glasartikeln nach der vorliegenden Offenbarung umfasst. Die Gläser nach der vorliegenden Offenbarung umfassen mindestens 3 Gew.-% Na$_2$O, vorzugsweise mindestens 7,1 Gew.-% Na$_2$O, besonders bevorzugt mindestens 7,5 Gew.-% Na$_2$O und ganz besonders bevorzugt mindestens 7,8 Gew.-% Na$_2$O. Auch der Gehalt an Na$_2$O ist nach der vorliegenden Offenbarung begrenzt. Die Gläser und Glasartikel nach der vorliegenden Offenbarung umfassen Na$_2$O zu höchstens 11,1 Gew.-%, bevorzugt zu höchstens 10,7 Gew.-% und ganz besonders bevorzugt zu höchstens 10,5 Gew.-%,

Die Gläser und Glasartikel umfassen als optionalen Bestandteil K$_2$O. Für die Einstellung einer optimierten Festigkeit eines Glases bzw. eines Glasartikels, insbesondere einer optimierten sharp-impact-Festigkeit bei gleichzeitig guter Festigkeit in statischen Festigkeitsuntersuchungen wie der Biegefestigkeit und gegenüber blunt-impact-Belastungen, kann es jedoch vorteilhaft sein, wenn das Glas eine gewisse Menge an K$_2$O umfasst. Insbesondere hat sich gezeigt, dass der Ionenaustausch und mithin die Vorspannbarkeit durch K$_2$O verbessert werden kann. Dies wird auf die durch die Kalium-Ionen aufgelockerte Glasstruktur zurückgeführt. Vorzugsweise umfasst das Glas bzw. der Glasartikel nach der vorliegenden Offenbarung mindestens 0,1 Gew.-% K$_2$O, besonders bevorzugt mindestens 0,2 Gew.-% und ganz besonders bevorzugt mindestens 0,3 Gew.-%. Jedoch ist der Gehalt an K$_2$O begrenzt, da es nicht am Ionenaustausch teilnimmt. Die Gläser bzw. Glasartikel nach der vorliegenden Offenbarung umfassen daher höchstens 1,5 Gew.-% K$_2$O, besonders bevorzugt höchstens 1 Gew.-% und ganz besonders bevorzugt höchstens 0,75 Gew.-%.

MgO ist eine weitere optionale Komponente der Gläser bzw. Glasartikel nach der vorliegenden Offenbarung. Magnesium verringert die Schmelzviskosität und hat auch Einfluss auf den Ionenaustausch. Der Gehalt an MgO ist in der Gläsern und Glasartikel begrenzt und beträgt höchstens 2 Gew.-%, vorzugsweise höchstens 1,5 Gew.-% und ganz besonders bevorzugt höchstens 1 Gew.-%.

Weiterhin können die Gläser oder Glasartikel nach der vorliegenden Offenbarung CaO zu höchstens 0,55 Gew.-%, vorzugsweise zu höchstens 0,5 Gew.-%, besonders bevorzugt zu höchstens 0,25 Gew.-% und ganz besonders bevorzugt zu höchstens 0,1 Gew.-% umfassen. Auch SrO kann vom Glas bzw. vom Glasartikel nach der vorliegenden Offenbarung umfasst sein, und zwar in einem Gehalt von bis zu 3 Gew.-%.

Eine weitere optionale Komponente des Glases bzw. des Glasartikels nach der vorliegenden Offenbarung ist ZnO. Die Gläser bzw. Glasartikel nach der vorliegenden Offenbarung umfassen höchstens 3 Gew.-% ZnO, vorzugsweise höchstens 2, Gew.-% ZnO, besonders bevorzugt höchstens 1,5 Gew.-% ZnO und ganz besonders bevorzugt höchstens 1 Gew.-% ZnO.

P$_2$O$_5$ ist vom Glas bzw. vom Glasartikel nach der vorliegenden Offenbarung zu mindestens 0,1 Gew.-% umfasst. P$_2$O$_5$ ist eine Komponente, welche den Ionenaustausch erleichtert, also zu geringeren Prozesszeiten führt oder führen kann. Vorzugsweise beträgt der Gehalt des Glases bzw. Glasartikels 0,25 Gew.-% und besonders bevorzugt mindestens 0,5 Gew.-%. Jedoch kann ein zu hoher Gehalt eines Glases oder Glasartikels an P$_2$O$_5$ die chemische Stabilität des Glases oder Glasartikels verringern oder es durch P$_2$O$_5$ zu Entmischungserscheinungen kommen. Daher umfasst das Glas oder der Glasartikel nach der vorliegenden Offenbarung höchstens 4,5 Gew.-% P$_2$O$_5$, vorzugsweise höchstens 2 Gew.-%, besonders bevorzugt höchstens 1,75 Gew.-% und ganz besonders bevorzugt höchstens 1,5 Gew.-%.

Eine weitere Komponente von Gläsern und Glasartikeln nach der vorliegenden Offenbarung ist ZrO$_2$. ZrO$_2$ wirkt in den Gläsern und Glasartikeln nach der vorliegenden Offenbarung als Netzwerkbildner und erhöht vorteilhaft die chemische Beständigkeit des Glases bzw. Glasartikels sowie dessen Härte. Von den Gläsern und Glasartikeln nach der vorliegenden Offenbarung ist ZrO$_2$ daher zu mindestens 1 Gew.-% umfasst, vorzugsweise zu mindestens 2,5 Gew.-%, besonders bevorzugt zu mindestens 2,8 Gew.-% und ganz besonders bevorzugt zu mindestens 2,9 Gew.-%. Weiterhin umfassen die Gläser und Glasartikel nach der vorliegenden Offenbarung höchstens 4,5 Gew.-% ZrO$_2$, vorzugsweise höchstens 4,2 Gew.-% und besonders bevorzugt höchstens 4,1 Gew.-%.

Weiterhin umfasst der Glasartikel oder das Glas nach der vorliegenden Offenbarung vorzugsweise bis zu 0,15 Gew.-% CeO$_2$, bevorzugt bis zu 0,1 Gew.-% CeO$_2$, und/oder bis zu 0,1 Gew.-% Fe$_2$O$_3$. CeO$_2$ kann dabei beispielsweise als Läutermittel zugesetzt sein. Auch erhöht CeO$_2$ die UV-Stabilität von Gläsern und Glasartikeln in vorteilhafter Weise.

Weiterhin vorzugsweise umfasst der Glasartikel oder das Glas nach der vorliegenden Offenbarung SrO und BaO lediglich als unvermeidliche Spuren in einer Konzentration von jeweils höchstens 500 ppm.

Weiterhin ist das Verhältnis der vom Glas bzw. vom Glasartikel umfassten Alkali- und Erdalkalioxide bestimmend. Diese weiten das Netzwerk auf und ermöglichen auf diese Weise, dass schnell eine hohe Vorspannung erzielt werden kann. Auch $P_2O_5$ ist hierbei bestimmend. Die Erfinder haben herausgefunden, dass dieses Zusammenspiel durch den Gehalt des Glases bzw. eines Glasartikels (Angaben jeweils in Gew.-%) an $Na_sO$ (für die Alkalioxide), an ZnO (welches hier die Funktion eines Erdalkalioxids einnimmt) und an $P_2O_5$ ausgedrückt werden kann, nämlich durch

$$[P_2O_5 + (Na_2O*ZnO)]$$

Dieser Wert sollte größer als 0,8 betragen, jedoch weniger als 12. Überraschenderweise hat sich gezeigt, dass lediglich bei einer Zusammensetzung in diesen Zusammensetzungsbereich und unter Einhaltung dieser Bedingung eine entsprechende gespeicherte Zugspannung, also eine gute Festigkeit bei sharp-impact"-Belastungen erreicht wird.

Ein nochmals weiterer Aspekt der vorliegenden Offenbarung betrifft einen chemisch vorgespannten, scheibenförmigen Glasartikel mit einer Dicke zwischen mindestens 0,4 mm und höchstens 3 mm,

vorzugsweise einen Glasartikel nach dem ersten und/oder dem zweiten Aspekt der vorliegenden Offenbarung, welcher hergestellt ist durch einen zweistufigen Ionenaustausch eines Lithium-Alumosilikatglases, wobei

ein erster Ionenaustausch für eine Dauer von 1,5 Stunden bis 4 Stunden bei einer Temperatur zwischen 380°C und höchstens 395°C, und mit einer Zusammensetzung des Tauschbades zwischen mindestens 40 Gew.-% und höchstens weniger als 70 Gew.-% Kaliumsalz, insbesondere $KNO_3$, und höchstens 60 Gew.-% bis mindestens mehr als 30 Gew,-% $NaNO_3$, und

ein zweiter Ionenaustausch für eine Dauer von 2,5 Stunden bis 5 Stunden bei einer Temperatur zwischen 360°C und 390°C und mit einer Zusammensetzung des Tauschbades zwischen 90 Gew.-% und 95 Gew.-% $KNO_3$, und 10 Gew.-% bis 5 Gew.-% $NaNO_3$, durchgeführt wird.

Durch eine Herstellung eines vorgespannten Glasartikels wie vorstehend ausgeführt kann auf besonders schnelle Weise ein Glasartikel erzeugt werden, welcher eine hohe Festigkeit aufweist,

Insbesondere ist es auf diese Weise möglich, einen Glasartikel herzustellen, welcher eine hohe Festigkeit bei sharp-impact-Belastungen aufweist.

Im Rahmen der vorliegenden Offenbarung gelten die folgenden Begriffe und Definitionen:

Unter einem Tauschbad wird eine Salzschmelze verstanden, wobei diese Salzschmelze in einem Ionenaustauschverfahren für ein Glas oder einen Glasartikel zum Einsatz kommt. Im Rahmen der vorliegenden Offenbarung werden die Begriffe des Tauschbads und des Ionenaustauschbads synonym verwendet.

In der Regel werden für Tauschbäder Salze in technischer Reinheit verwendet. Dies bedeutet, dass trotz der Verwendung von beispielsweise lediglich Natriumnitrat als Ausgangsstoff für ein Tauschbad noch gewisse Verunreinigungen vom Tauschbad umfasst sind. Das Tauschbad ist dabei eine Schmelze eines Salzes, beispielsweise also von Natriumnitrat, oder eines Gemischs von Salzen, beispielsweise ein Gemisch von einem Natrium- und einem Kaliumsalz. Dabei wird die Zusammensetzung des Tauschbades in der Form angegeben, dass sie sich auf die nominelle Zusammensetzung des Tauschbades ohne Berücksichtigung von eventuell vorhandenen Verunreinigungen bezieht Sofern daher im Rahmen der vorliegenden Offenbarung von einer 100%igen Natriumnitratschmelze gesprochen wird, bedeutet dies also, dass als Rohstoff lediglich Natriumnitrat verwendet wurde. Der tatsächliche Gehalt des Tauschbades an Natriumnitrat kann jedoch davon abweichen und wird dies in der Regel auch, da insbesondere technische Rohstoffe einen gewissen Anteil an Verunreinigungen aufweisen. Dieser liegt jedoch in der Regel bei weniger als 5 Gew.-%, bezogen auf das Gesamtgewicht des Tauschbads, insbesondere bei weniger als 1 Gew.-%.

In entsprechender Weise werden bei Tauschbädern, welche ein Gemisch verschiedener Salze aufweisen, die nominellen Gehalte dieser Salze ohne Berücksichtigung von technische bedingten Verunreinigungen der Ausgangsstoffe angegeben. Ein Tauschbad mit 90 Gew.-% $KNO_3$ und 10 Gew.-% $NaNO_3$ kann also ebenfalls noch geringe Verunreinigungen aufweisen, welche jedoch durch die Rohstoffe bedingt sind und in der Regel bei weniger als 5 Gew.-%, bezogen auf das Gesamtgewicht des Tauschbads, insbesondere bei weniger als 1 Gew.-%, liegen sollten.

Weiterhin ändert sich die Zusammensetzung des Tauschbades auch im Laufes des Ionenaustausches, da durch den fortgesetzten Ionenaustausch insbesondere Lithium-Ionen aus dem Glas bzw. dem Glasartikel in das Tauschbad migrieren. Eine solche Änderung der Zusammensetzung des Tauschbades durch Alterung wird vorliegend allerdings ebenfalls, sofern nicht ausdrücklich anders angegeben, nicht berücksichtigt. Vielmehr wird im Rahmen der vorliegenden Offenbarung bei der Angabe der Zusammensetzung eines Tauschbads auf die nominelle ursprüngliche Zusammensetzung abgestellt.

Unter einem Spannungsprofil wird im Rahmen der vorliegenden Offenbarung der Auftrag der Spannung in einem Glasartikel, wie beispielsweise einer Glasscheibe, über die Dicke des betrachteten Glasartikels in einem Diagramm verstanden. Sofern im Rahmen der vorliegenden Offenbarung von einem Druckspannungsprofil die Rede ist, wird hierbei derjenige Teil eines Spannungsprofils verstanden, in welchem die Spannung positive Werte annimmt, also größer als Null ist. Zugspannung weist hingegen ein negatives Vorzeichen auf.

Unter einem zusammengesetzten Druckspannungsprofil wird im Rahmen der vorliegenden Offenbarung ein solches Druckspannungsprofil verstanden, bei welchem sich die im entsprechenden Artikel, wie einem Glasartikel, erzeugte Druckspannung aus mindestens zwei Teilbereichen zusammensetzt.

Die in einem vorgespannten Glasartikel gespeicherte Druckspannung ergibt sich als Integration der Druckspannung über die Dicke des Glasartikels. Dieses Integral wird im Rahmen der vorliegenden Offenbarung als Druckspannungsintegral bezeichnet.

Die in einem vorgespannten Glasartikel gespeicherte Zugspannung ergibt sich als Mittelwert der integrierten Zugspannung über die Gesamtdicke des Glasartikels. Dieses Integral wird im Rahmen der vorliegenden Offenbarung als Zugspannungsintegral bezeichnet. Im Rahmen der vorliegenden Offenbarung wird mithin die gespeicherte Zugspannung als normierte Zugspannung oder synonym als normiertes Zugspannungsintegral, also als auf die Dicke bezogenes Zugspannungsintegral, verstanden und wird immer als Betrag (positiver Wert) angegeben. Die gespeicherte Zugspannung ist im Rahmen der vorliegenden Offenbarung synonym mit den Begriffen der normierten (oder auf die Dicke bezogenen) Zugspannung und des normierten (oder auf die Dicke bezogenen) Zugspannungsintegrals.

Unter einem scheibenförmigen Glasartikel wird im Rahmen der vorliegenden Offenbarung ein Glasartikel verstanden, bei welchem die laterale Abmessung in einer Raumrichtung mindestens eine Größenordnung geringer ist, als in den beiden anderen Raumrichtung, wobei diese Raumrichtungen bezüglich eines kartesischen Koordinatensystems angegeben sind, in welchem diese Raumrichtungen sich jeweils senkrecht zueinander erstrecken und dabei die Dicke in Normalenrichtung der größten oder Hauptoberfläche von der einen Hauptoberfläche zur anderen Hauptoberfläche gemessen wird.

Da die Dicke mindestens eine Größenordnung geringer ist als Breite und Länge des Glasartikels, können Breite und Länge dabei in derselben Größenordnung liegen. Es ist aber auch möglich, dass die Länge nochmals deutlich größer ist als die Breite des Glasartikeis. Scheibenförmige Glasartikel im Sinne der vorliegenden Offenbarung können daher auch ein Glasband umfassen.

Im Sinne der vorliegenden Offenbarung wird unter einem Glas ein Material verstanden und unter einem Glasartikel ein aus dem Material Glas hergestelltes und/oder das Material Glas umfassendes Erzeugnis. Insbesondere kann ein Glasartikel aus Glas bestehen oder überwiegend, also zu mindestens 90 Gew,-%, das Material Glas enthalten.

Unter einer chemischen Vorspannung wird im Rahmen der vorliegenden Offenbarung ein Prozess verstanden, bei welchem ein Glasartikel in ein sogenanntes Tauschbad eingetaucht wird, Dabei kommt es zum Austausch von Ionen. Unter einem Kalium-Austausch wird im Sinne der vorliegenden Offenbarung verstanden, dass Kalium-Ionen aus dem Tauschbad in den Glasartikel, insbesondere in die Oberfläche des Glasartikels, migrieren, also beispielsweise eingebaut werden, wobei gleichzeitig kleine Alkali-Ionen, wie beispielsweise Natrium, aus dem Glasartikel in das Tauschbad migrieren. Unter einem Natrium-Austausch wird in entsprechender Weise verstanden, dass Natrium-Ionen aus dem Tauschbad in die Oberfläche des Glasartikels migrieren, wohingegen kleine Ionen, beispielsweise Lithium-Ionen, aus dem Glasartikel, insbesondere aus der Oberfläche des Glasartikels, in das Tauschbad migrieren. Wie vorstehend bereits beschrieben, kommt es durch diesen Ionenaustausch zum Aufbau einer Druckspannungszone im Oberflächenbereich des Glasartikels.

Unter der maximalen Zugspannung wird im Rahmen der vorliegenden Offenbarung der minimale Spannungswert im Spannungsprofil eines Glasartikels verstanden.

Unter einem sogenannten "sharp impact" wird im Rahmen der vorliegenden Offenbarung eine Belastung verstanden, bei welcher die Schädigung durch einen kleinen, spitzen Gegenstand oder durch eine Vielzahl solcher kleiner, spitzer Gegenstände erzeugt wird. Mit anderen Worten handelt es sich also um eine Einwirkung mit einem oder mehreren spitzen Gegenständen, also beispielsweise mit Partikeln, welche sehr geringe Krümmungsradien aufweisen bzw. bei welchen der Winkel der Spitze weniger als 100° beträgt.

Gemäß einer Ausführungsform der Offenbarung weist der Glasartikel eine maximale Zugspannung zwischen 55 MPa und 85 MPa auf. Eine solche Ausgestaltung des Glasartikels ist vorteilhaft, weil es auf diese Weise insbesondere zu einer Verbesserung der Festigkeit bei blunt-impact-Beiastung, also insbesondere zu einer Verbesserung der sogenannten Kugelfallfestigkeit kommt. Mit dem Glasartikel nach dieser Ausführungsform ist also eine besonders gute Festigkeit bei allen relevanten Belastungsfällen verbunden. Dies war bislang so nicht möglich. Insbesondere konnte derzeit bei einer hohen maximalen Zugspannung, welche beispielsweise auch als "center tension" oder "central tension" bezeichnet und mit "CT" abgekürzt wird, keine gute Festigkeit bei sharp-impact-Belastungen erzielt werden. Die nunmehr erzielbaren maximalen Zugspannungen von zwischen 55 MPa und 85 MPa liegen ca. 10% bis 15 % höher als bei derzeit auf dem Markt befindlichen Gläsern bzw, Glasartikeln.

Vorzugsweise beträgt die Dicke des Glasartikels mindestens 0,5 mm. Solche Mindestdicken sind vorteilhaft, weil bei geringeren Dicken der Glasartikel insgesamt bereits sehr fragil ist.

Jedoch sind geringe Dicken von Glasartikeln vorteilhaft, da auf diese Weise die Glasartikel ein geringes Gewicht aufweisen. Dies ist insbesondere für Anwendungen des Glasartikels als beispielsweise Displayabdeckung in einem mobilen Gerät, wie einem Smartphone, von Vorteil.

Gemäß einer weiteren Ausführungsform des Glasartikels beträgt die Dicke des Glasartikels höchstens 2 mm, vorzugsweise höchstens 1 mm. Eine solche Ausgestaltung ist vorteilhaft, weil ein Glasartikel umso stabiler gegenüber mechanischer Einwirkung ist, je dicker er ist. Dickere Glasartikel bieten daher inhärent eine höhere mechanische Stabilität. Jedoch führt dies zu einer Erhöhung des Gewichts. Vorteilhaft sollte der Glasartikel daher höchstens 2 mm dick sein, insbesondere höchstens 1 mm dick.

Ein nochmals weiterer Aspekt der vorliegenden Offenbarung betrifft die Verwendung eines Glasartikels gemäß Ausführungsformen der vorliegenden Offenbarung. Die Offenbarung betrifft mithin die Verwendung des Glasartikel gemäß Ausführungsformen als Abdeckscheibe, insbesondere als Abdeckscheibe in der Unterhaltungselektronik, oder als Schutzverglasung, insbesondere als Schutzverglasung für Maschinen, oder als Verglasung in Hochgeschwindigkeitszügen, oder als Sicherheitsverglasung, oder als Automobilverglasung, oder in Tauchuhren, oder in U-Booten, oder als Abdeckscheibe für explosionsgeschützte Geräte, insbesondere für solche, in denen der Einsatz von Glas zwingend vorgeschrieben ist.

Ein nochmals weiterer Aspekt der vorliegenden Offenbarung betrifft ein Glas, umfassend die folgenden Komponenten in Gewichtsprozent:

| | |
|---|---|
| $SiO_2$ | 54 bis 64, bevorzugt 57 bis 64, besonders bevorzugt 60 bis 62 und ganz besonders bevorzugt 61 bis 62; |
| $Al_2O_3$ | 16 bis 28, bevorzugt 16 bis 21, besonders bevorzugt 17,5 bis 19,5 und ganz besonders bevorzugt 18 bis 19; |
| $B_2O_3$ | 0 bis 0,28, bevorzugt 0 bis 0,1; |
| $Li_2O$ | 3,5 bis 6,5, bevorzugt 3,7 bis 5,7, besonders bevorzugt 3,9 bis 5,5, ganz besonders bevorzugt 4 bis 5,4 und am meisten bevorzugt 4,5 -5,4; |
| $Na_2O$ | 3 bis 11,1, bevorzugt 7,1 bis 11,1 besonders bevorzugt 7,5 bis 10,7 und ganz besonders bevorzugt 7,8 bis 10,5; |
| $K_2O$ | 0,3 bis 0,75; |
| $MgO$ | 0 bis 2, bevorzugt 0 bis 1,5 und besonders bevorzugt 0 bis 1; |
| $CaO$ | 0 bis 0,55, bevorzugt 0 bis 0,5, besonders bevorzugt 0 bis 0,25 und ganz besonders bevorzugt 0 bis 0,1; |
| $ZnO$ | 0 bis 3, bevorzugt 0 bis 2, besonders bevorzugt 0 bis 1,5 und ganz besonders bevorzugt 0 bis 1; |
| $P_2O_5$ | 0,1 bis 4,5, bevorzugt 0,1 bis 2, besonders bevorzugt 0,25 bis 1,75 und ganz besonders bevorzugt 0,5 bis 1,5; |
| $ZrO_2$ | 1 bis 4,5, bevorzugt 2,5 bis 4,5, besonders bevorzugt 2,8 bis 4,2 und ganz besonders bevorzugt 2,9 bis 4,1, |

wobei das Glas und /oder der das Glas umfassende Glasartikel vorzugsweise bis zu 0,15 Gew.-% $CeO_2$, bevorzugt bis zu 0,1 Gew.-% $CeO_2$, und/oder bis zu 0,1 Gew.-% $Fe_2O_3$ umfasst und wobei weiterhin vorzugsweise das Glas SrO und BaO lediglich als unvermeidliche Spuren in einer Konzentration von jeweils höchstens 500 ppm umfasst, und wobei 0,8 kleiner als [$P_2O_5$ + ($Na_2O*ZnO$) ] kleiner als 12.

Weiterhin betrifft die vorliegende Offenbarung gemäß einem nochmals weiteren Aspekt auch ein Verfahren zur Herstellung eines Glasartikels gemäß Ausführungsformen der Offenbarung, umfassend

- einen ersten Ionenaustausch für eine Dauer von 1,5 Stunden bis 4 Stunden bei einer Temperatur zwischen 380°C und höchstens 395°C und mit einer Zusammensetzung des Tauschbades zwischen mindestens 40 Gew.-% bis höchstens weniger als 70 Gew.-% Kaliumsalz, insbesondere $KNO_3$, und höchstens 60 Gew.-% bis mindestens mehr als 30 Gew.-% $NaNO_3$, und

- einem zweiten Ionenaustausch für eine Dauer von 2,5 Stunden bis 5 Stunden bei einer Temperatur zwischen 360°C und 390°C und mit einer Zusammensetzung des Tauschbades zwischen 90 Gew.-% und 95 Gew.-% $KNO_3$, und 10 Gew.-% bis 5 Gew,-% $NaNO_3$.

Beispiele

Im Folgenden wird die Erfindung anhand von Beispielen näher erläutert.

Gemäß einer Ausführungsform umfasst der Glasartikel nach der vorliegenden Offenbarung folgende Komponenten (Angaben in Gew.-%):

| | |
|---|---|
| $SiO_2$ | 54 bis 64 |
| $Al_2O_3$ | 16 bis 28 |
| $B_2O_3$ | 0 bis 0,6 |
| $Li_2O$ | 3,5 bis 6,5 |
| $Na_2O$ | 3 bis 11,1 |

(fortgesetzt)

| | | |
|---|---|---|
| $K_2O$ | 0 bis 1,5 | |
| MgO | 0 bis 2 | |
| CaO | 0 bis 0,55 | |
| ZnO | 0 bis 3, bevorzugt 0 bis 2, besonders bevorzugt 0 bis 1,5 und ganz besonders bevorzugt 0 bis 1 | |
| $P_2O_5$ | 0,1 bis 4,5 | |
| $ZrO_2$ | 1 bis 4,5 | |

und wobei 0,8 kleiner als [$P_2O_5$ + ($Na_2O*ZnO$) ] kleiner als 12.

Gemäß einer weiteren Ausführungsform des Glasartikels umfasst der Glasartikel folgende Komponenten (Angaben in Gew.-%):

| | |
|---|---|
| $SiO_2$ | 57 bis 64 |
| $Al_2O_3$ | 16 bis 21 |
| $B_2O_3$ | 0 bis 0,45 |
| $Li_2O$ | 3,7 bis 5,7 |
| $Na_2O$ | 7,1 bis 11, 1 |
| $K_2O$ | 0,1 bis 1,5 |
| MgO | 0 bis 2 |
| CaO | 0 bis 0,5 |
| ZnO | 0 bis 2 |
| $P_2O_5$ | 0,1 bis 2 |
| $ZrO_2$ | 2,5 bis 4,5 |

und wobei 0,8 kleiner als [$P_2O_5$ + ($Na_2O*ZnO$) ] kleiner als 12.

Gemäß einer weiteren Ausführungsform des Glasartikels umfasst der Glasartikel folgende Komponenten (Angaben in Gew.-%):

| | |
|---|---|
| $SiO_2$ | 60 bis 62 |
| $Al_2O_3$ | 17,5 bis 19,5 |
| $B_2O_3$ | 0 bis 0,28 |
| $Li_2O$ | 3,9 bis 5,5 |
| $Na_2O$ | 7,5 bis 10,7 |
| $K_2O$ | 0,2 bis 1 |
| MgO | 0 bis 1,5 |
| CaO | 0 bis 0,25 |
| ZnO | 0 bis 1,5 |
| $P_2O_5$ | 0,25 bis 1,75 |
| $ZrO_2$ | 2,8 bis 4,2 |

und wobei 0,8 kleiner als [ $P_2O_5$ + ($Na_2O*ZnO$) ] kleiner als 12.

Gemäß einer weiteren Ausführungsform des Glasartikels umfasst der Glasartikel folgende Komponenten (Angaben in Gew.-%):

| | |
|---|---|
| $SiO_2$ | 61 bis 62 |
| $Al_2O_3$ | 18 bis 19 |
| $B_2O_3$ | 0 bis 0,1 |
| $Li_2O$ | 4 bis 5,4 |
| $Na_2O$ | 7,8 bis 10,5 |
| $K_2O$ | 0 bis 1, bevorzugt 0,3 bis 0,75 |
| MgO | 0 bis 1 |
| CaO | 0 bis 0,1 |

(fortgesetzt)

| | |
|---|---|
| ZnO | 0 bis 1 |
| $P_2O_5$ | 0,5 bis 1,5 |
| $ZrO_2$ | 2,9 bis 4,1 |

und wobei 0,8 kleiner als $[P_2O_5 + (Na_2O{*}ZnO)]$ kleiner als 12,

Der Glasartikel kann weiterhin bis zu 0,15 Gew.-%, bevorzugt bis zu 0,1 Gew.-% $CeO_2$, und/oder bis zu 0,1 Gew.-% $Fe_2O_3$ umfassen, Vorzugsweise umfasst das Glas BaO und/oder SrO lediglich in Form unvermeidlicher Spuren mit einem Gehalt von jeweils höchstens 500 ppm.

In der folgenden Tabelle 1 sind einige Beispiele von vorgespannten Glasartikeln zusammengestellt. Insbesondere sind hier Ausführungsbeispiele gemäß der vorliegenden Offenbarung Vergleichsbeispielen (abgekürzt: VB) gegenübergestellt.

**Tabelle 1 Vorspannungswerte verschiedener vorgespannter Glasartikel umfassend LAS-Gläser unterschiedlicher Zusammensetzung**

| | K CS (MPa) | K DoL ($\mu$m) | Na CS 30 (MPa) | Na CS (MPa) | Na DoL ($\mu$m) | Gespeicherte Zugspannung (MPa) |
|---|---|---|---|---|---|---|
| **Beispiel 1** | 735 | 5,7 | 180 | 233 | 118 | **21,87** |
| **VB 1** | 702 | 6,5 | 160 | 204 | 122 | **20,24** |
| **VB2** | 713 | 6,8 | 155 | 197 | 125 | **20,20** |
| **Beispiel 2** | 721 | 7,0 | 165 | 208 | 123 | **21,03** |
| **Beispiel 3** | 723 | 6,9 | 153 | 191 | 131 | **20,60** |
| **Beispiel 4** | 729 | 6,9 | 157 | 196 | 130 | **20,99** |
| **Beispiel 5** | 736 | 6,9 | 165 | 205 | 132 | **22,13** |
| **Beispiel 6** | 755 | 7,1 | 170 | 210 | 138 | **23,58** |

Tabelle 2 zeigt eine weitere Gegenüberstellung von vorgespannten Glasartikeln mit einem optimierten vorgespannten Glasartikel nach der vorliegenden Offenbarung.

**Tabelle 2 Vorspannungswerte verschiedener vorgespannter Glasartikel**

| | K CS (MPa) | K DoL ($\mu$m) | Na CS 30 (MPa) | Na CS (MPa) | Na DoL ($\mu$m) | Gespeicherte Zugspannung (MPa) |
|---|---|---|---|---|---|---|
| **VB 3** | 750 | 4,4 | 170 | 216 | 120 | **20,27** |
| **VB 4** | 750 | 4,0 | 100 | 125 | 135 | **13,91** |
| **VB5** | 820 | 7,6 | 130 | 163 | 123 | **18,01** |
| **Beispiel 6** | **775** | **7,1** | **175** | **221** | **125** | **22,70** |
| **VB6** | 975 | 5,0 | 127 | 161 | 127 | **17,54** |
| *VB 7* | *680* | 125 | | | | **60,71** |

In den folgenden beiden Tabellen sind die Werte für die Berechnung der gespeicherten Zugspannung zur besseren Nachvollziehbarkeit der Berechnung aufgeführt. Hierbei steht "SP" für "Schnittpunkt".

**Tabelle 3 Zur Verdeutlichung der Berechnung der gespeicherten Zugspannung der Glasartikel nach Tabelle 1**

| | SP K Dol | Na DoL-KDoL | SP Na DoL- | (a+b)/2 | K Integral in MPa*μm) | Na integral in MPa*μm | Gesamtintegral in MPa*mm | Gespeicherte Zugspannung (MPa) |
|---|---|---|---|---|---|---|---|---|
| **Beispiel 1** | 3,88 | 114,12 | 112.3 | 113,21 | 2094,75 | 13211,04 | 15,31 | **21,87** |
| **VB 1** | 4,60 | 117,40 | 115,5 | 116,45 | 2281,50 | 11888,38 | 14,17 | **20,24** |
| **VB 2** | 4,90 | 120,10 | 118,2 | 119,15 | 2424,20 | 11712,45 | 14,14 | **20,20** |
| **Beispiel 2** | 4,98 | 118,02 | 116,0 | 117,01 | 2523,50 | 12194,78 | 14,72 | **21,03** |
| **Beispiel 3** | 5,08 | 125,92 | 124,1 | 125,01 | 2494,35 | 11925,95 | 14,42 | **20,60** |
| **Beispiel 4** | 5,04 | 124,96 | 123,1 | 124,03 | 2515,05 | 12179,75 | 14,69 | **20,99** |
| **Beispiel 5** | 4,97 | 127,03 | 125,1 | 126,07 | 2539,20 | 12951,29 | 15,49 | **22,13** |
| **Beispiel 6** | 5,13 | 132,87 | 130,9 | 131,89 | 2680,25 | 13828,14 | 16,51 | **23,58** |

**Tabelle 4 Zur Verdeutlichung der Berechnung der gespeicherten Zugspannung der Glasartikel nach Tabelle 2**

| | SP K Dol | Na DoL-K DoL | SP Na DoL- | (a+b)/2 | K Integral in MPa*μm | Na Integral in MPa*μm | Gesamtintegral in MPa*mm | Gespeicherte Zugspannung (MPa) |
|---|---|---|---|---|---|---|---|---|
| **VB 3** | 3,10 | 116,90 | 115,6 | 116,25 | 1650,00 | 12537,56 | 14,19 | **20,27** |
| **VB 4** | 3,30 | 131,70 | 131,0 | 131,35 | 1500,00 | 8235,65 | 9,74 | **13,91** |
| **VB 5** | 6,08 | 116,92 | 115,4 | 116,16 | 3116,00 | 9490,27 | 12,61 | **18,01** |
| **Beispiel 6** | **5,07** | **119,93** | **117,9** | **118,92** | **2751,25** | **13140,11** | **15,89** | **22,70** |
| **VB 6** | 4,17 | 122,83 | 122,0 | 122,42 | 2437,50 | 9842,17 | 12,28 | **17,54** |
| **VB 7** | | | | | | | 42,50 | **60,71** |

Zusammensetzungen von Gläsern nach der vorliegenden Offenbarung sind in der folgenden Tabelle 5 zusammengestellt. Es handelt sich hierbei um Angaben in Gew.-%, welche aus Analysen von Gläsern nach der Schmelze und vor einem chemischen Vorspannen erhalten wurden.

**Tabelle 5 Zusammensetzungen von Beispielgläsern**

| Name | Beispiel 1 | Beispiel 2 | Beispiel 3 | Beispiel 4 | Beispiel 5 | Beispiel 6 |
|---|---|---|---|---|---|---|
| $SiO_2$ | 61,40 | 60,40 | 61,50 | 61,20 | 61,30 | 61,40 |
| $Al_2O_3$ | 18,20 | 18,00 | - 18,30 | 18,70 | 18,70 | 18,70 |
| $B_2O_3$ | 0,58 | 0,55 | 0,55 | 0,28 | 0,27 | 0,10 |
| $Li_2O$ | 4,90 | 4,80 | 4,50 | 4,60 | 4,60 | 4,70 |
| $Na_2O$ | 8,80 | 8,10 | 8,80 | 8,80 | 9,10 | 9,10 |
| $K_2O$ | 0,84 | 1,60 | 0,90 | 0,84 | 0,47 | 0,50 |

(fortgesetzt)

| Name | Beispiel 1 | Beispiel 2 | Beispiel 3 | Beispiel 4 | Beispiel 5 | Beispiel 6 |
|---|---|---|---|---|---|---|
| MgO | | | 0,52 | 0,53 | 0,53 | 0,5 |
| CaO | 0,51 | | 0,013 | 0,013 | 0,014 | - |
| ZnO | 0,53 | 1,24 | 0,19 | 0,19 | 0,19 | 0,20 |
| $P_2O_5$ | 0,58 | 1,58 | 1,03 | 1,04 | 1,04 | 1,03 |
| $Fe_2O_3$ | 0,036 | 0,034 | 0,034 | 0,033 | 0,032 | 0,032 |
| $ZrO_2$ | 3,53 | 3,47 | 3,60 | 3,61 | 3,63 | 3,60 |
| $CeO_2$ | 0,095 | 0,093 | 0,098 | 0,097 | 0,100 | 0,096 |
| $P_2O_5+Na_2O*ZnO$ | 5,244 | 11,624 | 2,702 | 2,712 | 2,769 | 2,850 |

In Tabelle 6 sind Zusammensetzungen von Vergleichsgläsern aufgeführt.

**Tabelle 6 Zusammensetzungen von Vergleichsbeispielen (VB)**

| Name | VB 1 | VB 2 | VB 3 |
|---|---|---|---|
| $SiO_2$ | 60,70 | 60,60 | 62,00 |
| $Al_2O_3$ | 18,10 | 18,10 | 18,40 |
| $B_2O_3$ | 0,57 | 0,56 | 0,59 |
| $Li_2O$ | 4,90 | 4,70 | 4,80 |
| $Na_2O$ | 8,80 | 8,70 | 9,40 |
| $K_2O$ | 0,84 | 0,87 | 0,10 |
| MgO | - | - | - |
| CaO | 0,01 | 0,01 - | 0,78 |
| SrO | - | - | 0,091 |
| ZnO | 1,24 | 1,24 | 0,08 |
| $P_2O_5$ | 1,14 | 1,60 | - |
| $Fe_2O_3$ | 0,036 | 0,037 | 0,037 |
| $ZrO_2$ | 3,48 | 3,47 | 3,56 |
| $CeO_2$ | 0,093 | 0,095 | 0,1 |
| $P_2O_5+Na_2O*ZnO$ | 12,052 | 12,388 | 0,752 |

In Tabelle 7 ist für einen Glasartikel einer optimierten Zusammensetzung nach dem Beispiel 6 nach der vorliegenden Offenbarung der Einfluss der chemischen Vorspannung aufgezeigt.

**Tabelle 7 Einfluss der Vorspannungsbedingungen auf die Festigkeitswerte für einen LAS-Glasartikel nach der vorliegenden Offenbarung**

| Austausch 1 | Austausch 2 | K CS (MPa) | K DoL (µm) | Na CS 30 (MPa) | Na CS (MPa) | Na DoL (µm) | Gespeicherte Zugspannung (MPa) |
|---|---|---|---|---|---|---|---|
| 2,5h 395°C 50/50% | 3h 380°C 92/8% | 775 | 6 | 163 | 207,4 | 124 | 20,921 |
| 4h 390°C 50/50% | 3h 380°C 92/8% | 771 | 7,1 | 171 | 214,4 | 128 | 22,577 |

(fortgesetzt)

| Austausch 1 | Austausch 2 | K CS (MPa) | K DoL (µm) | Na CS 30 (MPa) | Na CS (MPa) | Na DoL (µm) | Gespeicherte Zugspannung (MPa) |
|---|---|---|---|---|---|---|---|
| *2h 400°C 50/50%* | *3h 380°C 92/8%* | 769 | *5,9* | *162* | *207,7* | *121* | *20,435* |
| *3h 395°C 70/30%* | *3h 380°C 92/8%* | 800 | 6,5 | *141* | *178,4* | *124* | *18,782* |
| 3h 395°C 50/50% | 2,5h 380°C 90/10% | 757 | 5,8 | 173 | 219,7 | 126 | 22,131 |
| 3h 395°C 50/50% | 4,5h 380°C 92/8% | 769 | 7,4 | 161 | 202,6 | 125 | 21,223 |
| 3h 395°C 50/50% | 3h 360°C 94/6% | 825 | 5,2 | 177 | 225,3 | 126 | 22,619 |
| *3h 390°C 40/60%* | *4h 370°C 97,5/2,5%* | 815 | 7 | *139* | *175,3* | *124* | *18,819* |

Die erzielbare Vorspannung ist neben den sonstigen Bedingungen aber auch abhängig vom Alter des Tauschbades, insbesondere von dessen Lithium-Gehalt. Wie der nachstehenden Tabelle 8 zu entnehmen, nimmt die erzielbare gespeicherte Zugspannung mit steigendem Lithium-Gehalt und folglich mit zunehmendem Alter des Tauschbades ab.

Hier scheint insbesondere der nominelle Gehalt des Tauschbades beim ersten Ionenaustausch von mehr als mindestens 40 Gew.-% Kaliumsalz (und entsprechend weniger als höchstens 60 Gew.-% Natriumsalz) sowie höchstens weniger als 70 Gew.-% Kaliumsalz (und entsprechend mindestens mehr als 30 Gew.-% Natriumsalz) sowie eine Temperatur zwischen mindestens 380°C und weniger als 400°C, beispielsweise höchstens 395°C, entscheidend für das Erreichen einer gespeicherten Zugspannung zu sein. Austauschprozesse, bei welchen diese Bedingungen im ersten Ionenaustausch nicht eingehalten wurden, zeigen eine nicht ausreichende gespeicherte Zugspannung und sind in der vorstehenden Tabelle 7 kursiv gedruckt.

**Tabelle 8 Einfluss des Lithium-Gehalts des Tauschbads auf die erzielbare gespeicherte Zugspannung**

| Lithium-Gehalt des Tauschbads | K CS (MPa) | K DoL (µm) | Na CS 30 (MPa) | Na CS (MPa) | Na DoL (µm) | Gespeicherte Zugspannung in MPa |
|---|---|---|---|---|---|---|
| 0%/0% w/w Li | 750 | 4,3 | 168 | 221 | 115 | **19,90** |
| 0,3%/0,3% w/w Li | 649 | 4,4 | 149 | 195 | 118 | **17,92** |
| 0,6%/0,6% w/w Li | 587 | 4,5 | 136 | 175 | 123 | **16,81** |
| 0,9%/0,9% w/w Li | 520 | 4,5 | 119 | 153 | 125 | **14,88** |
| 1,2%/1,2% w/w Li | 491 | 4,6 | 97 | 123 | 131 | **12,72** |
| 1,5%/1,5% w/w Li | 471 | 4,6 | 81 | 101 | 135 | **11,02** |

<u>Zeichnungen</u>

Die Erfindung wird weiterhin im Folgenden anhand von Zeichnungen erläutert. Es zeigen

Fig. 1 bis 3    Spannungsprofile von Glasartikeln nach dem Stand der Technik,

Fig. 4    den Einfluss der Glaszusammensetzung und des Spannungsprofils auf die sogenannte Set-Drop-Festigkeit,

Fig. 5    ein Diagramm zur Verdeutlichung des Zusammenhangs zwischen gespeicherter Zugspannung und der Festigkeit im Sandpapier-Kugelfalltest,

Fig. 6        ein Diagramm der Festigkeit von unterschiedlichen Glasartikeln im Sandpapier-Kugelfalltest,

Fig. 7        eine schematische und nicht maßstabsgetreue Abbildung eines Glasartikels nach der vorliegenden Offenbarung, sowie

Fig. 8        den Zusammenhang zwischen der speicherbaren Zugspannung und der Bruchhöhe im Sandpapier-Kugelfalltest für ein Glas der Dicke 0,7 mm.

In Fig. 1 sind in einem Diagramm, bei welchem auf der y-Achse die Spannung in MPa aufgetragen ist und auf der x-Achse die Glastiefe in $\mu$m, anhand eines beispielhaften zusammengesetzten Spannungsprofils 1 kennzeichnende Größen eines Spannungsprofils für einen Glasartikel, welcher ein LAS-Glas umfasst, dargestellt. Hierbei ist nicht die Spannung über die gesamte Dicke des Glasartikels dargestellt, vielmehr ist lediglich beispielhaft bis etwa zur Hälfte des Glasartikels die Spannung eingetragen.

Der Punkt 101 bezeichnet hierbei die an der Oberfläche des Glasartikels, also bei der Glastiefe 0 $\mu$m vorliegende Spannung. Hier handelt es sich um Druckspannung, die durch den Austausch von Kalium-Ionen hervorgerufen ist (Kalium-CS). Der Punkt 102 bezeichnet die an der Oberfläche des Glasartikels durch den Austausch von Natrium hervorgerufene Druckspannung (auch als Natrium-CS bezeichnet). Es handelt sich hierbei um einen durch Extrapolation ermittelten Wert, da sich hier das Spannungsprofil, das auf den Austausch von Natrium-Ionen zurückzuführen ist, und das auf den Austausch von Kalium beruhende Spannungsprofil überlagern. Der Punkt 103 zeigt den Wert der auf dem Austausch von Natrium-Ionen basierenden Druckspannung bei einer Glastiefe von 30 $\mu$m (Natrium-CS-30). Am Punkt 105 ist die Spannung im Glasartikel 0. Es handelt sich hierbei um die sogenannten Druckspannungstiefe für Natrium-Ionen, auch als Natrium-DoL (oder auch nur als DoL) bezeichnet. Mit 104 ist das durch den Austausch von Natrium-Ionen hervorgerufene Druckspannungsintegral bezeichnet.

Durch Extrapolation desjenigen Teils des Spannungsprofils 1 erhalten wird die Druckspannungstiefe für Kalium (Kalium-DoL), hier bezeichnet mit 106.

Mit 107 ist der Bereich des normierten Zugspannungsintegrals gekennzeichnet, also der gespeicherten Zugspannung. Schließlich bezeichnet 108 den "Natrium-GS-Schnittpunkt" also die Druckspannung an dem Punkt des Druckspannungsprofils, an welchem die Natrium-Druckspannungskurve und die Kalium-Druckspannungskurve sich schneiden.

In Fig. 2 ist ein schematisches Spannungsprofil 2, hier ausgebildet als reines Druckspannungsprofil, für einen Glasartikel einer Dicke von 0,7 mm, welcher ein Alkalisilikatglas umfasst, gekennzeichnet. Auch mit solchen Gläsern können also hohe Druckspannungstiefen und hohe Druckspannungen erzielt werden. Allerdings werden im Vergleich mit zusammengesetzten Druckspannungsprofilen - wie in Fig. 1 beispielhaft dargestellt- ein höheres Druckspannungsintegral und entsprechend auch ein höheres Zugspannungsintegral erhalten. Dies bedeutet, dass solche vorgespannten AS-Gläser eine geringe Festigkeit gegenüber sharp-impact-Belastungen aufweisen. Das normierte Zugspannungsintegral weist hier einen sehr hohen Wert von ca. 60,7 MPa auf.

Fig. 3 zeigt ein Spannungsprofil 3 eines Glasartikels, welcher ein LAS-Glas umfasst. Das Spannungsprofil ist hier also zusammengesetzt. Auch wenn Druckspannungstiefe und die Druckspannung an der Oberfläche vergleichbar zum AS-Glas aus Fig. 2 sind, ist das Druckspannungsintegral hier deutlich geringer, beträgt nämlich nur etwa ein Drittel dessen, was für den Glasartikel nach Fig. 2 ermittelt wird. Hier bezeichnet 301 das Kalium-Integral der gespeicherten Druckspannung bei einem Kalium-CS-Wert von 975 MPa und einer Kalium-DoL von 5 $\mu$m. Mit 302 ist das Natrium-Integral der gespeicherten Druckspannung mit einer Natrium-CS-30 von 127 $\mu$m und einer Natrium-DoL von 127 $\mu$m bezeichnet. Die Summe dieser beiden normierten Integrale ergibt die gespeicherte Druckspannung, welche im Betrag der im vorgespannten Glas gespeicherten Zugspannung entspricht.

Den Zusammenhang verdeutlichen die in Fig. 4 dargestellten Werte im sogenannten set-drop-Test, welcher für das AS-Glas nach Fig. 2 und das LAS-Glas nach Fig. 3 ermittelt wurden. Trotz nahezu gleicher Druckspannung an der Oberfläche und nahezu gleicher Druckspannungstiefe ergeben sich in dieser sharp-impact-Belastungen deutliche Unterschiede in der erzielten Festigkeit. Insbesondere ist die ermittelte Festigkeit in dieser Belastung für den vorgespannten LAS-Glasartikel deutlich höher als die Festigkeit, die für den vorgespannten AS-Glasartikel ermittelt wurde.

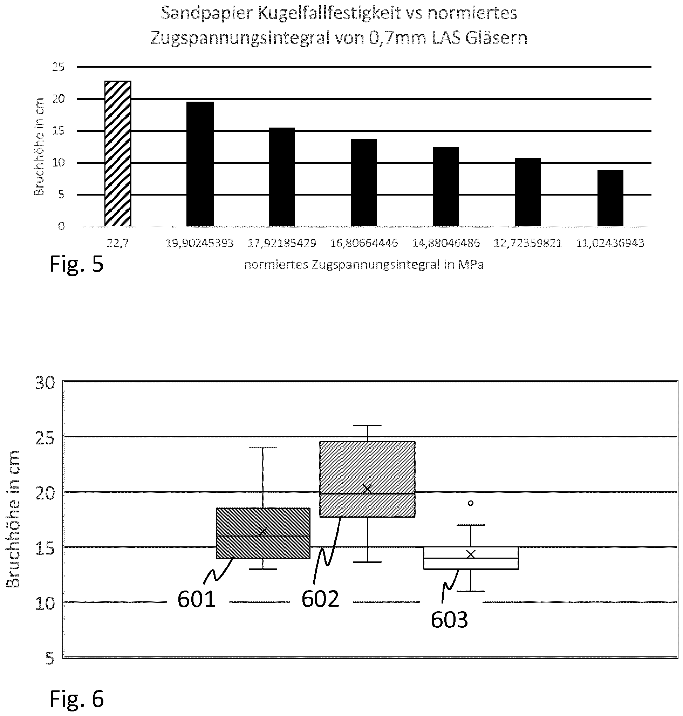

Die Abhängigkeit der Festigkeit, welche in Sandpapier-Kugelfall-Untersuchungen bestimmt wird, in Abhängigkeit von der gespeicherten Zugspannung ist in Fig. 5 dargestellt. In Fig. 5 ist dabei der besseren Darstellbarkeit halber "Sandpapier" mit SP abgekürzt. Gespeicherte Zugspannungen unterhalb von 20 MPa führen zu schlechten Testergebnissen, nämlich zu Bruchhöhen von weniger als 20 cm. Den Einfluss der Glaszusammensetzung auf die Festigkeit zeigt Fig. 6. Hier ist für Glasartikel, welche jeweils unterschiedliche LAS-Ausgangsgläser umfassen, die erzielte Festigkeit im Sandpapier-Kugelfalltest aufgetragen. Links im Diagramm ist die Sandpapier-Kugelfall-Festigkeit im Balken 601 für einen chemisch vorgespannten Glasartikel dargestellt, welcher ein LAS-Glas nach beispielsweise WO 2012/126394 A1 umfasst. Rechts dargestellt ist die Sandpapier-Kugelfall-Festigkeit im Balken 603 für einen anderen vorgespannten Glasartikel umfassend ein weiteres LAS-Glas nach dem Stand der Technik. In der Mitte ist im Balken 602 die Festigkeit im Sandpapier-Kugelfalltest für einen chemisch vorgespannten Glasartikel nach der vorliegenden Offenbarung dargestellt. Dieser weist eine optimierte Festigkeit im Sandpapierkugelfalltest auf.

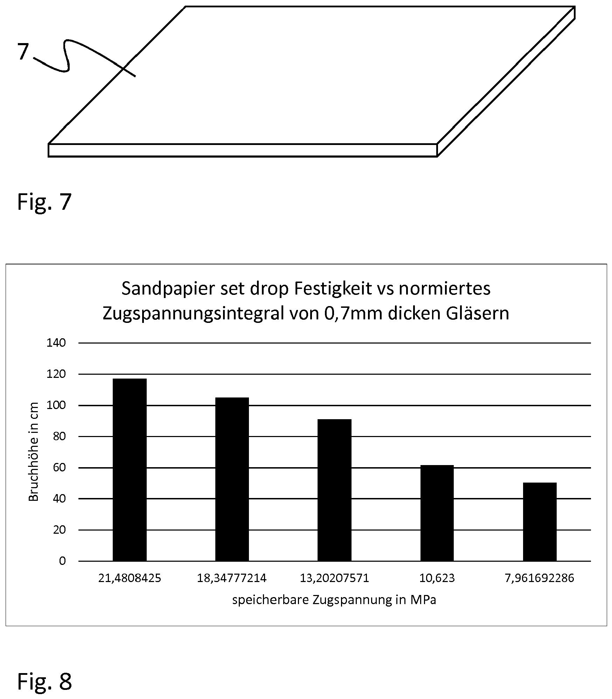

Fig. 7 zeigt einen scheibenförmigen, chemisch vorgespannten oder chemisch vorspannbaren Glasartikel 7 nach Ausführungsformen der vorliegenden Offenbarung.

Fig. 8 zeigt eine Darstellung der Bruchhöhe im Sandpapier-Set-Drop-Test in Abhängigkeit vom normierten Zugspannungsintegral für Gläser der Dicke 0,7 mm. Es ist deutlich erkennbar, dass zumindest im Bereich der hier vorliegenden gespeicherten Zugspannungen die Bruchhöhen größer werden - entsprechend ist also die Festigkeit des Glases bzw. Glasartikels erhöht bzw. ist die Beständigkeit des Glases bzw. Glasartikels gegenüber dieser mechanischen Belastung also verbessert, je größer die gespeicherte Zugspannung ist.

Bezugszeichenliste

| | |
|---|---|
| 1 | beispielhaftes Spannungsprofil eines vorgespannten LAS-Glasartikels |
| 101 | Oberfläche des Glasartikels, Kalium-CS |
| 102 | Natrium-CS |
| 103 | Natrium-CS-30 |
| 104 | Natrium-Druckspannungsintegral |
| 105 | Natrium-DoL, Druckspannungstiefe für Natrium-Ionen |
| 106 | Druckspannungstiefe für Kalium-Ionen, Kalium-DoL |
| 107 | gespeicherte Zugspannung, normiertes Zugspannungsintegral |
| 108 | Na-CS-K-DoL-Schnittpunkt |
| 2 | schematisches Spannungsprofil eines vorgespannten AS-Glasartikels |
| 3 | Spannungsprofil eines vorgespannten LAS-Glasartikels |
| 301 | normiertes Kalium-Integral der Druckspannung |
| 302 | normiertes Natrium-Integral der Druckspannung |
| 303 | Na-CS-K-DoL-Schnittpunkt |
| 7 | scheibenförmiger, chemisch vorgespannter oder chemisch vorspannbarer Glasartikel |
| 401 | Sandpapier-Set-Drop-Festigkeit für AS-Glas |
| 402 | Sandpapier-Set-Drop-Festigkeit für LAS-Glas |
| 601 | Sandpapier-Kugelfall-Festigkeit für LAS-Glas nach dem Stand der Technik |
| 602 | Sandpapier-Kugelfall-Festigkeit für LAS-Glas nach einer Ausführungsform |
| 603 | Sandpapier-Kugelfall-Festigkeit für weiteres LAS-Glas nach dem Stand der Technik |

**Patentansprüche**

1. Chemisch vorgespannter, scheibenförmiger Glasartikel (7) mit einer Dicke zwischen mindestens 0,4 mm und höchstens 3 mm,
hergestellt durch einen zweistufigen Ionenaustausch eines Lithium-Alumosilikatglases, wobei
ein erster Ionenaustausch für eine Dauer von 1,5 Stunden bis 4 Stunden bei einer Temperatur zwischen 380°C und höchstens 395°C, und mit einer Zusammensetzung des Tauschbades zwischen mindestens 40 Gew.-% und höchstens weniger als 70 Gew.-% Kaliumsalz, insbesondere $KNO_3$, und höchstens 60 Gew.-% bis mindestens mehr als 30 Gew.-% $NaNO_3$, und
ein zweiter Ionenaustausch für eine Dauer von 2,5 Stunden bis 5 Stunden bei einer Temperatur zwischen 360°C und 390°C und mit einer Zusammensetzung des Tauschbades zwischen 90 Gew.-% und 95 Gew.-% $KNO_3$, und 10 Gew.-% bis 5 Gew.-% $NaNO_3$, durchgeführt wird.

2. Chemisch vorgespannter, scheibenförmiger Glasartikel (7) nach Anspruch 1 mit einer Dicke zwischen mindestens 0,4 mm und höchstens 3 mm, welcher eine Druckspannungstiefe für Kalium von mindestens 4 $\mu$m und höchstens 8 $\mu$m aufweist und eine Druckspannung in einer Tiefe von 30 $\mu$m aufgrund von Natriumaustausch von mindestens 90 MPa bei einer Dicke des Glasartikels von 0,5 mm, mindestens 100 MPa bei einer Dicke des Glasartikels von 0,55 mm, mindestens 110 MPa bei einer Dicke des Glasartikels von 0,6 mm, mindestens 120 MPa bei einer Dicke des Glasartikels von 0,7 mm und mindestens 140 MPa bei einer Dicke des Glasartikels von 1 mm sowie vorzugsweise höchstens 200 MPa, wobei das Verhältnis von Natrium-Austauschtiefe in $\mu$m zur Dicke des Glasartikels in mm größer als 0,130 ist, sowie ein normiertes Integral der Zugspannung, somit eine speicherbare Zugspannung von mindestens 20,6 MPa und höchstens 30 MPa, vorzugsweise höchstens 27,5 MPa, besonders bevorzugt von höchstens 25 MPa und ganz besonders bevorzugt von höchstens 24 MPa.

3. Scheibenförmiger Glasartikel (7) nach Anspruch 1 oder 2 mit einer Dicke zwischen mindestens 0,4 mm und höchstens 3 mm, umfassend ein Glas umfassend die folgenden Komponenten in Gew.-%:

$SiO_2$ 54 bis 64, bevorzugt 57 bis 64, besonders bevorzugt 60 bis 62 und ganz besonders bevorzugt 61 bis 62;
$Al_2O_3$ 16 bis 28, bevorzugt 16 bis 21, besonders bevorzugt 17,5 bis 19,5 und ganz besonders bevorzugt 18 bis 19;
$B_2O_3$ 0 bis 0,6, bevorzugt 0 bis 0,45, besonders bevorzugt 0 bis 0,28 und ganz besonders bevorzugt 0 bis 0,1;
$Li_2O$ 3,5 bis 6,5, bevorzugt 3,7 bis 5,7, besonders bevorzugt 3,9 bis 5,5, ganz besonders bevorzugt 4 bis 5,4 und am meisten bevorzugt 4,5 bis 5,4;
$Na_2O$ 3 bis 11,1, bevorzugt 7,1 bis 11,1 besonders bevorzugt 7,5 bis 10,7 und ganz besonders bevorzugt 7,8 bis 10,5;
$K_2O$ 0 bis 1,5, bevorzugt 0,1 bis 1,5, besonders bevorzugt 0,2 bis 1 und ganz besonders bevorzugt 0,3 bis 0,75;
MgO 0 bis 2, bevorzugt 0 bis 1,5 und besonders bevorzugt 0 bis 1;
CaO 0 bis 0,55, bevorzugt 0 bis 0,5, besonders bevorzugt 0 bis 0,25 und ganz besonders bevorzugt 0 bis 0,1;
ZnO 0 bis 3, bevorzugt 0 bis 2, besonders bevorzugt 0 bis 1,5 und ganz besonders bevorzugt 0 bis 1;
$P_2O_5$ 0,1 bis 4,5, bevorzugt 0,1 bis 2, besonders bevorzugt 0,25 bis 1,75 und ganz besonders bevorzugt 0,5 bis 1,5;
$ZrO_2$ 1 bis 4,5, bevorzugt 2,5 bis 4,5, besonders bevorzugt 2,8 bis 4,2 und ganz besonders bevorzugt 2,9 bis 4,1,

wobei der Glasartikel (7) vorzugsweise bis zu 0,15 Gew.-% $CeO_2$, bevorzugt bis zu 0,1 Gew.-% $CeO_2$, und/oder bis zu 0,1 Gew.-% $Fe_2O_3$ umfasst und wobei weiterhin vorzugsweise der Glasartikel SrO und BaO lediglich als unvermeidliche Spuren in einer Konzentration von jeweils höchstens 500 ppm umfasst, und wobei 0,8 kleiner als $[P_2O_5 + (Na_2O*ZnO)]$ kleiner als 12.

4. Glasartikel (7) nach einem der Ansprüche 1 bis 3, aufweisend eine maximale Zugspannung zwischen 55 MPa und 85 MPa.

5. Glasartikel (7) nach einem der Ansprüche 1 bis 4, wobei die Dicke des Glasartikels mindestens 0,5 mm beträgt.

6. Glasartikel (7) nach einem der Ansprüche 1 bis 5, wobei die Dicke des Glasartikels höchstens 2 mm, vorzugsweise höchstens 1 mm, beträgt.

7. Verwendung eines Glasartikels (7) nach einem der Ansprüche 1 bis 6 als Abdeckscheibe, insbesondere als Abdeckscheibe in der Unterhaltungselektronik, oder als Schutzverglasung, insbesondere als Schutzverglasung für Maschinen, oder als Verglasung in Hochgeschwindigkeitszügen, oder als Sicherheitsverglasung, oder als Automobilverglasung, oder in Tauchuhren, oder in U-Booten, oder als Abdeckscheibe für explosionsgeschützte Geräte, insbesondere für solche, in denen der Einsatz von Glas zwingend vorgeschrieben ist.

8. Glas, umfassend die folgenden Komponenten in Gew.-%:

$SiO_2$ 54 bis 64, bevorzugt 57 bis 64, besonders bevorzugt 60 bis 62 und ganz besonders bevorzugt 61 bis 62;
$Al_2O_3$ 16 bis 28, bevorzugt 16 bis 21, besonders bevorzugt 17,5 bis 19,5 und ganz besonders bevorzugt 18 bis 19;
$B_2O_3$ 0 bis 0,28 und bevorzugt 0 bis 0,1;
$Li_2O$ 3,5 bis 6,5, bevorzugt 3,7 bis 5,7, besonders bevorzugt 3,9 bis 5,5 und ganz besonders bevorzugt 4 bis 5,4 und am meisten bevorzugt 4,5 bis 5,4;
$Na_2O$ 3 bis 11,1, bevorzugt 7,1 bis 11,1 besonders bevorzugt 7,5 bis 10,7 und ganz besonders bevorzugt 7,8 bis 10,5;
$K_2O$ 0,3 bis 0,75;
MgO 0 bis 2, bevorzugt 0 bis 1,5 und besonders bevorzugt 0 bis 1;
CaO 0 bis 0,55, bevorzugt 0 bis 0,5, besonders bevorzugt 0 bis 0,25 und ganz besonders bevorzugt 0 bis 0,1;
SrO 0 bis 3;
ZnO 0 bis 3, bevorzugt 0 bis 2, besonders bevorzugt 0 bis 1,5 und ganz besonders bevorzugt 0 bis 1;
$P_2O_5$ 0,1 bis 4,5, bevorzugt 0,1 bis 2, besonders bevorzugt 0,25 bis 1,75 und ganz besonders bevorzugt 0,5 bis 1,5;
$ZrO_2$ 1 bis 4,5, bevorzugt 2,5 bis 4,5, besonders bevorzugt 2,8 bis 4,2 und ganz besonders bevorzugt 2,9 bis 4,1,

wobei das Glas vorzugsweise bis zu 0,15 Gew.-% $CeO_2$, bevorzugt bis zu 0,1 Gew.-% $CeO_2$, und/oder bis zu 0,1 Gew.-% $Fe_2O_3$ umfasst und wobei weiterhin vorzugsweise das Glas SrO und BaO lediglich als unvermeidliche Spuren in einer Konzentration von jeweils höchstens 500 ppm umfasst, und

wobei 0,8 kleiner als $[P_2O_5 + (Na_2O*ZnO)]$ kleiner als 12.

9. Herstellung eines Glasartikels (7) nach einem der Ansprüche 1 bis 6, umfassend

- einen ersten Ionenaustausch für eine Dauer von 1,5 Stunden bis 4 Stunden bei einer Temperatur zwischen 380°C und 395°C und mit einer Zusammensetzung des Tauschbades zwischen mindestens 40 Gew.-% bis höchstens weniger als 70 Gew.-% Kaliumsalz, insbesondere $KNO_3$, und höchstens 60 Gew.-% bis mindestens mehr als 30 Gew.-% $NaNO_3$, und
- einem zweiten Ionenaustausch für eine Dauer von 2,5 Stunden bis 5 Stunden bei einer Temperatur zwischen 360°C und 390°C und mit einer Zusammensetzung des Tauschbades zwischen 90 Gew.-% und 95 Gew.-% $KNO_3$, und 10 Gew.-% bis 5 Gew.-% $NaNO_3$.

## Claims

1. A chemically toughened sheet-like glass article (7) having a thickness between at least 0.4 mm and at most 3 mm,

produced by a two-stage ion exchange of a lithium aluminosilicate glass; wherein
a first ion exchange is performed over a duration of 1.5 hours to 4 hours at a temperature between 380 °C and at most 395 °C, and with a composition of the exchange bath between at least 40 wt% and at most less than 70 wt% of potassium salt, in particular $KNO_3$, and at most 60 wt% to at least more than 30 wt% of $NaNO_3$; and
a second ion exchange is performed over a duration of 2.5 hours to 5 hours at a temperature between 360 °C and 390 °C, and with a composition of the exchange bath between 90 wt% and 95 wt% of $KNO_3$, and 10 wt% to 5 wt% of $NaNO_3$.

2. The chemically toughened sheet-like glass article (7) according to claim 1, having a thickness between at least 0.4 mm and at most 3 mm, having a depth of compressive stress for potassium of at least 4 $\mu$m and at most 8 $\mu$m, and a compressive stress at a depth of 30 $\mu$m due to sodium exchange of at least 90 MPa in the case of a thickness of the glass article of 0.5 mm, of at least 100 MPa in the case of a thickness of the glass article of 0.55 mm, of at least 110 MPa in the case of a thickness of the glass article of 0.6 mm, of at least 120 MPa in the case of a thickness of the glass article of 0.7 mm, and of at least 140 MPa in the case of a thickness of the glass article of 1 mm, and preferably at most 200 MPa, wherein the ratio of sodium exchange depth, in $\mu$m, to the thickness of the glass article, in mm, is greater than 0.130; and exhibiting a normalized integral of tensile stress, that is a storable tensile stress of at least 20.6 MPa and at most 30 MPa, preferably at most 27.5 MPa, more preferably at most 25 MPa, and most preferably at most 24 MPa.

3. The sheet-like glass article (7) according to claim 1 or 2, having a thickness between at least 0.4 mm and at most 3 mm, comprising a glass that contains the following components, in wt%:

$SiO_2$      54 to 64, preferably 57 to 64, more preferably 60 to 62, and most preferably 61 to 62;
$Al_2O_3$     16 to 28, preferably 16 to 21, more preferably 17.5 to 19.5, and most preferably 18 to 19;
$B_2O_3$      0 to 0.6, preferably 0 to 0.45, more preferably 0 to 0.28, and most preferably 0 to 0.1;
$Li_2O$      3.5 to 6.5, preferably 3.7 to 5.7, more preferably 3.9 to 5.5, yet more preferably 4 to 5.4, and most preferably 4.5 to 5.4;
$Na_2O$      3 to 11.1, preferably 7.1 to 11.1, more preferably 7.5 to 10.7, and most preferably 7.8 to 10.5;
$K_2O$       0 to 1.5, preferably 0.1 to 1.5, more preferably 0.2 to 1, and most preferably 0.3 to 0.75;
MgO       0 to 2, preferably 0 to 1.5, and most preferably 0 to 1;
CaO       0 to 0.55, preferably 0 to 0.5, more preferably 0 to 0.25, and most preferably 0 to 0.1;
ZnO       0 to 3, preferably 0 to 2, more preferably 0 to 1.5, and most preferably 0 to 1;
$P_2O_5$      0.1 to 4.5, preferably 0.1 to 2, more preferably 0.25 to 1.75, and most preferably 0.5 to 1.5;
$ZrO_2$      1 to 4.5, preferably 2.5 to 4.5, more preferably 2.8 to 4.2, and most preferably 2.9 to 4.1;

wherein the glass article (7) preferably comprises up to 0.15 wt% of $CeO_2$, more preferably up to 0.1 wt% of $CeO_2$,

and/or up to 0.1 wt% of $Fe_2O_3$, and wherein furthermore the glass article preferably includes SrO and BaO only in the form of unavoidable traces in a concentration of not more than 500 ppm each; and
with 0.8 less than $[P_2O_5 + (Na_2O * ZnO)]$ less than 12.

4.  The glass article (7) according to any one of claims 1 to 3, exhibiting a maximum tensile stress between 55 MPa and 85 MPa.

5.  The glass article (7) according to any one of claims 1 to 4, wherein the glass article has a thickness of at least 0.5 mm.

6.  The glass article (7) according to any one of claims 1 to 5, wherein the glass article has a thickness of at most 2 mm, preferably at most 1 mm.

7.  Use of a glass article (7) according to any one of claims 1 to 6 as a cover sheet, in particular as a cover sheet in consumer electronics, or as protective glazing, in particular as protective glazing for machinery, or as glazing in high-speed trains, or as safety glazing, or as automotive glazing, or in dive watches, or in submarines, or as a cover sheet for explosion-proof equipment, in particular for those in which the use of glass is mandatory.

8.  A glass, comprising the following components, in wt%:

| | |
|---|---|
| $SiO_2$ | 54 to 64, preferably 57 to 64, more preferably 60 to 62, and most preferably 61 to 62; |
| $Al_2O_3$ | 16 to 28, preferably 16 to 21, more preferably 17.5 to 19.5, and most preferably 18 to 19; |
| $B_2O_3$ | 0 to 0.28, and preferably 0 to 0.1; |
| $Li_2O$ | 3.5 to 6.5, preferably 3.7 to 5.7, more preferably 3.9 to 5.5, and yet more preferably 4 to 5.4, and most preferably 4.5 to 5.4; |
| $Na_2O$ | 3 to 11.1, preferably 7.1 to 11.1, more preferably 7.5 to 10.7, and most preferably 7.8 to 10.5; |
| $K_2O$ | 0 to 1.5, preferably 0.1 to 1.5, more preferably 0.2 to 1, and most preferably 0.3 to 0.75; |
| MgO | 0 to 2, preferably 0 to 1.5, and most preferably 0 to 1; |
| CaO | 0 to 0.55, preferably 0 to 0.5, more preferably 0 to 0.25, and most preferably 0 to 0.1; |
| SrO | 0 to 3; |
| ZnO | 0 to 3, preferably 0 to 2, more preferably 0 to 1.5, and most preferably 0 to 1; |
| $P_2O_5$ | 0.1 to 4.5, preferably 0.1 to 2, more preferably 0.25 to 1,75, and most preferably 0.5 to 1.5; |
| $ZrO_2$ | 1 to 4.5, preferably 2.5 to 4.5, more preferably 2.8 to 4.2, and most preferably 2.9 to 4.1; |

wherein the glass preferably comprises up to 0.15 wt% of $CeO_2$, more preferably up to 0.1 wt% of $CeO_2$, and/or up to 0.1 wt% of $Fe_2O_3$, and wherein furthermore the glass preferably includes SrO and BaO only in the form of unavoidable traces in a concentration of not more than 500 ppm each; and
with 0.8 less than $[P_2O_5 + (Na_2O * ZnO)]$ less than 12.

9.  Making of a glass article (7) according to any one of claims 1 to 6, comprising

    - a first ion exchange over a duration of 1.5 hours to 4 hours at a temperature between 380 °C and 395 °C and with a composition of the exchange bath between at least 40 wt% and at most less than 70 wt% of potassium salt, in particular $KNO_3$, and at most 60 wt% to at least more than 30 wt% of $NaNO_3$; and
    - a second ion exchange over a duration of 2.5 hours to 5 hours at a temperature between 360 °C and 390 °C and with a composition of the exchange bath of between 90 wt% and 95 wt% of $KNO_3$, and 10 wt% to 5 wt% of $NaNO_3$.

**Revendications**

1.  Article en verre (7) chimiquement précontraint en forme de vitre, présentant une épaisseur comprise entre au moins 0,4 mm et au maximum 3 mm,
    fabriqué par échange d'ions à deux étapes d'un verre d'aluminosilicate de lithium, lors duquel on réalise
    un premier échange d'ions pendant une durée allant de 1,5 heure à 4 heures, à une température comprise entre 380 °C et au maximum 395 °C, et avec une composition du bain d'échange comprise entre au moins 40 % en poids et au maximum moins de 70 % en poids de sel de potassium, en particulier $KNO_3$, et au maximum 60 % en poids à au moins plus de 30 % en poids de NaNO₃, et
un deuxième échange d'ions pendant une durée allant de 2,5 heures à 5 heures, à une température comprise entre 360 °C et 390 °C, et avec une composition du bain d'échange comprise entre 90 % en poids et 95 % en poids de KNO₃ et entre 10 % en poids et 5 % en poids de NaNO₃.

**2.** Article en verre (7) chimiquement précontraint en forme de vitre selon la revendication 1, d'une épaisseur comprise entre 0,4 mm et au maximum 3 mm, qui présente une profondeur de contrainte de compression pour le potassium d'au moins 4 μm et d'au maximum 8 μm et une contrainte de compression à une profondeur de 30 μm, en raison d'un échange de sodium, d'au moins 90 MPa pour une épaisseur de 0,5 mm de l'article en verre, d'au moins 100 MPa pour une épaisseur de 0,55 mm de l'article en verre, d'au moins 110 MPa pour une épaisseur de 0,6 mm de l'article en verre, d'au moins 120 MPa pour une épaisseur de 0,7 mm de l'article en verre, et d'au moins 140 MPa pour une épaisseur de 1 mm de l'article en verre, et de préférence d'au maximum 200 MPa, le rapport entre la profondeur d'échange de sodium en μm et l'épaisseur de l'article en verre en mm étant supérieur à 0,130, ainsi qu'une intégrale normalisée de la contrainte de traction, et donc une contrainte de traction pouvant être mémorisée, d'au moins 20,6 MPa et d'au maximum 30 MPa, de préférence d'au maximum 27,5 MPa, et de manière particulièrement avantageuse d'au maximum 25 MPa, et de manière tout à fait préférée d'au maximum 24 MPa.

**3.** Article en verre (7) en forme de vitre selon la revendication 1 ou 2, présentant une épaisseur comprise entre au moins 0,4 mm et au maximum 3 mm,
comprenant un verre avec les constituants suivants, en % en poids :

SiO₂  54 à 64, de préférence 57 à 64, de manière particulièrement avantageuse 60 à 62, et de manière tout à fait préférée 61 à 62 ;

Al₂O₃  16 à 28, de préférence 16 à 21, de manière particulièrement avantageuse 17,5 à 19,5, et de manière tout à fait préférée 18 à 19 ;

B₂O₃  0 à 0,6, de préférence 0 à 0,45, de manière particulièrement avantageuse 0 à 0,28, et de manière tout à fait préférée 0 à 0,1 ;

Li₂O  3,5 à 6,5, de préférence 3,7 à 5,7, notamment 3,9 à 5,5, de manière particulièrement avantageuse 4 à 5,4, et de manière tout à fait préférée 4,5 à 5,4 ;

Na₂O  3 à 11,1, de préférence 7,1 à 11,1, de manière particulièrement avantageuse 7,5 à 10,7, et de manière tout à fait préférée 7,8 à 1 0,5 ;

K₂O  0 à 1,5, de préférence 0,1 à 1,5, de manière particulièrement avantageuse 0,2 à 1, et de manière tout à fait préférée 0,3 à 0,75 ;

MgO  0 à 2, de préférence 0 à 1,5, et de manière particulièrement avantageuse 0 à 1 ;

CaO  0 à 0,55, de préférence 0 à 0,5, de manière particulièrement avantageuse 0 à 0,25, et de manière tout à fait préférée 0 à 0,1 ;

ZnO  0 à 3, de préférence 0 à 2, de manière particulièrement avantageuse 0 à 1,5, et de manière tout à fait préférée 0 à 1 ;

P₂O₅  0,1 à 4,5, de préférence 0,1 à 2, de manière particulièrement avantageuse 0,25 à 1,75, et de manière tout à fait préférée 0,5 à 1,5 ;

ZrO₂  1 à 4,5, de préférence 2,5 à 4,5, de manière particulièrement avantageuse 2,8 à 4,2, et de manière tout à fait préférée 2,9 à 4,1,

l'article en verre (7) comprenant de préférence jusqu'à 0,15 % en poids de CeO₂, de préférence jusqu'à 0,1 % en poids de CeO₂, et/ou jusqu'à 0,1 % en poids de Fe₂O₃, et l'article en verre comprenant de préférence en outre SrO et BaO seulement sous forme de traces inévitables dans une concentration respectivement d'au maximum 500 ppm, et
0,8 étant inférieur à [P₂O₅ + (Na₂O*ZnO)] inférieur à 12.

**4.** Article en verre (7) selon l'une des revendications 1 à 3, présentant une contrainte de traction maximale comprise entre 55 MPa et 85 MPa.

**5.** Article en verre (7) selon l'une des revendications 1 à 4, l'épaisseur de l'article en verre étant au moins de 0,5 mm.

**6.** Article en verre (7) selon l'une des revendications 1 à 5, l'épaisseur de l'article en verre étant au maximum de 2 mm, de préférence au maximum de 1 mm.

**7.** Utilisation d'un article en verre (7) selon l'une des revendications 1 à 6, en tant que vitre de recouvrement, notamment comme vitre de recouvrement dans l'électronique de loisirs, ou en tant que vitrage de protection, notamment comme vitrage de protection pour des machines, ou en tant que vitrage dans des trains à grande vitesse ou en tant que vitrage de sécurité ou en tant que vitrage automobile, ou bien dans des montres de plongée ou dans des sous-marins, ou en tant que vitre de recouvrement pour des appareils antidéflagrants, notamment ceux dans lesquels l'utilisation du verre est obligatoire.

**8.** Verre comprenant les constituants suivants, en % en poids :

$SiO_2$ 54 à 64, de préférence 57 à 64, de manière particulièrement avantageuse 60 à 62, et de manière tout à fait préférée 61 à 62 ;

$Al_2O_3$ 16 à 28, de préférence 16 à 21, de manière particulièrement avantageuse 17,5 à 19,5, et de manière tout à fait préférée 18 à 19 ;

$B_2O_3$ 0 à 0,28 et de préférence 0 à 0,1 ;

$Li_2O$ 3,5 à 6,5, de préférence 3,7 à 5,7, de manière particulièrement avantageuse 3,9 à 5,5, de préférence notamment 4 à 5,4, et manière tout à fait préférée 4,5 à 5,4 ;

$Na_2O$ 3 à 11,1, de préférence 7,1 à 11,1, de manière particulièrement avantageuse 7,5 à 10,7, et de manière tout à fait préférée 7,8 à 10,5 ;

$K_2O$ 0,3 à 0,75 ;

MgO 0 à 2, de préférence 0 à 1,5, et de manière particulièrement avantageuse 0 à 1 ;

CaO 0 à 0,55, de préférence 0 à 0,5, de manière particulièrement avantageuse 0 à 0,25, et de manière tout à fait préférée 0 à 0,1 ;

SrO 0 à 3 ;

ZnO 0 à 3, de préférence 0 à 2, de manière particulièrement avantageuse 0 à 1,5, et de manière tout à fait préférée 0 à 1 ;

$P_2O_5$ 0,1 à 4,5, de préférence 0,1 à 2, de manière particulièrement avantageuse 0,25 à 1,75, et de manière tout à fait préférée 0,5 à 1,5 ;

$ZrO_2$ 1 à 4,5, de préférence 2,5 à 4,5, de manière particulièrement avantageuse 2,8 à 4,2, et de manière tout à fait préférée 2,9 à 4,1,

le verre comprenant de préférence jusqu'à 0,15 % en poids de $CeO_2$, de préférence jusqu'à 0,1 % en poids de $CeO_2$, et/ou jusqu'à 0,1 % en poids de $Fe_2O_3$, et le verre comprenant en outre de préférence SrO et BaO seulement sous forme de traces inévitables dans une concentration respectivement d'au maximum 500 ppm, et 0,8 étant inférieur à $[P_2O_5 + (Na_2O*ZnO)]$ inférieur à 12.

**9.** Fabrication d'un article en verre (7) selon l'une des revendications 1 à 6, comprenant

- un premier échange d'ions pendant une durée allant de 1,5 heure à 4 heures, à une température comprise entre 380 °C et 395 °C, et avec une composition du bain d'échange comprise entre au moins 40 % en poids et au maximum moins de 70 % en poids de sel de potassium, en particulier $KNO_3$, et au maximum 60 % en poids à au moins plus de 30 % en poids de $NaNO_3$, et
- un deuxième échange d'ions pendant une durée allant de 2,5 heures à 5 heures, à une température comprise entre 360 °C et 390 °C, et avec une composition du bain d'échange comprise entre 90 % en poids et 95 % en poids de $KNO_3$ et entre 10 % en poids et 5 % en poids de $NaNO_3$.

Fig. 1

Druckspannungsprofil 0,7mm AS Glas

Fig. 2

Fig. 3

Fig. 4

**Sandpapier Kugelfallfestigkeit vs normiertes Zugspannungsintegral von 0,7mm LAS Gläsern**

Bruchhöhe in cm

25

20

15

10

5

0

22,7   19,90245393   17,92185429   16,80664446   14,88046486   12,72359821   11,02436943

normiertes Zugspannungsintegral in MPa

**Fig. 5**

Bruchhöhe in cm

30

25

20

15

10

5

601   602   603

**Fig. 6**

7

Fig. 7

### Sandpapier set drop Festigkeit vs normiertes Zugspannungsintegral von 0,7mm dicken Gläsern

Bruchhöhe in cm

| | | | | |
|---|---|---|---|---|
| 140 | | | | |
| 120 | | | | |
| 100 | | | | |
| 80 | | | | |
| 60 | | | | |
| 40 | | | | |
| 20 | | | | |
| 0 | 21,4808425 | 18,34777214 | 13,20207571 | 10,623 | 7,961692286 |

speicherbare Zugspannung in MPa

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018152845 A1
- DE 112011100664 T5
- US 20180057401 A1
- US 20180029932 A1
- US 20170166478 A1
- US 9908811 B2
- US 20160122240 A1
- US 20160122239 A1
- US 20170295657 A1
- US 8312739 B2
- US 9359251 B2
- US 9718727 B2
- US 20120052271 A1
- US 20150030840 A1
- US 20140345325 A1
- US 9487434 B2
- US 9517968 B2
- US 9567254 B2
- US 9676663 B2
- US 20180002223 A1
- US 20170129803 A1
- US 201601002014 A1
- US 20150368153 A1
- US 20150368148 A1
- US 20150239775 A1
- US 9908812 B2
- US 9902648 B2
- US 9593042 B2
- WO 2012126394 A1
- US 9540278 B2
- US 8759238 B2
- US 8075999 B2
- US 4055703 A
- DE 102010009584 B4
- CN 102690059 A